# EUROPÄISCHE PATENTSCHRIFT

(11) **EP 0 279 168 B1**
(45) Veröffentlichungstag und Bekanntmachung des Hinweises auf die Patenterteilung: **05.05.1993**
(21) Anmeldenummer: 88100182.0
(22) Anmeldetag: 08.01.1988
(51) Int. Cl.: H02H 3/00

(54) **Schaltungsanordnung zur Stromversorgung einer Vielzahl von Verbrauchern**
Circuit for the power supply of a multitude of consumers
Circuit pour l'alimentation de courant d'une pluralité de consommateurs

(30) Priorität: 28.01.1987 DE 3702517
(43) Veröffentlichungstag der Anmeldung: 24.08.1988
(73) Patentinhaber: Mehnert, Walter, Dr., D-85521 Ottobrunn (DE)
(72) Erfinder: Mehnert, Walter, Dr., D-85521 Ottobrunn (DE)
(74) Vertreter: Strasser, Wolfgang, Dipl.-Phys

(56) Entgegenhaltungen:
- EP-A- 0 096 601
- EP-A- 0 119 187
- EP-A- 0 209 765
- DE-A- 3 338 764
- GB-A- 2 182 812
- IBM TECHNICAL DISCLOSURE BULLETIN, Band 25, Nr. 7B, Dezember 1982, Seiten 3641-3642; New York, US M.J. KELLY et al.: "Self-diagnostic motor overcurrent protection for a printer"

## Beschreibung

Die Erfindung betrifft eine Schaltungsanordnung zur Stromversorgung einer Vielzahl von Verbrauchern gemäß dem Oberbegriff von Anspruch 1.

Schaltungsanordnungen zur Stromversorgung einer Vielzahl von Verbrauchern in einem Bordnetz sind insbesondere aus Kraftfahrzeugen bekannt, wo eine elektrische Energiequelle wie z.B. die Autobatterie bzw. die Lichtmaschine dazu dient, eine Vielzahl von Verbrauchern, wie z.B. die Scheinwerfer, die Scheibenwischer, die Heckscheibenheizung, die Blinker usw. dann mit elektrischer Energie zu versorgen, wenn der jeweilige Betriebszustandsschalter, bei dem es sich im allgemeinen um einen einfachen Ein/Aus-Schalter handelt, von Hand in die "Ein"-Stellung gebracht, d.h. geschlossen worden ist. Jeder dieser Verbraucher besitzt eine im allgemeinen einadrige Verbraucher-Anschlußleitung, in der der Betriebszustandsschalter liegt und über die er mit einer allen Verbrauchern gemeinsamen Haupt-Anschlußleitung verbunden ist, die ihrerseits an den einen Anschlußpol der Energiequelle angeschlossen ist, während der Verbraucher mit seinem zweiten Anschluß über einen Sockel oder dergleichen auf kurzem Weg mit der praktisch überall unmittelbar zugänglichen, mit dem zweiten Pol der Energiequelle verbundenen Systemmasse, z.B. mit der Autokarosserie verbunden ist.

Bei den allgemein üblichen Kfz-Bordnetzen liegt in der Verbraucher-Anschlußleitung eines jeden Verbrauchers nicht nur der zum Ein- und Ausschalten dieses Verbrauchers erforderliche Betriebszustandsschalter sondern auch noch eine als Schmelzsicherung ausgebildete Sicherungseinrichtung mit dem Verbraucher in Reihe, die beim Auftreten einer Überspannung oder eines Kurzschlusses am Verbraucher die Verbindung zur Energiequelle unterbricht und somit das Fließen eines unzulässig hohen Stromes verhindert.

Diese bekannte Anordnung weist eine Reihe von Nachteilen auf. So ist es beispielsweise unumgänglich, die eben genannten Sicherungen für alle Verbraucher möglichst nahe beieinander, vorzugsweise in einem gemeinsamen Sicherungskasten anzuordnen, um beim Auftreten eines Defektes auf schnelle und einfache Weise überprüfen zu können, ob eine Sicherung durchgebrannt ist und gegebenenfalls ersetzt werden muß. Weiterhin müssen die von Hand zu bedienenden Betriebszustandsschalter möglichst an einer Stelle, d.h. bei einem Kraftfahrzeug im Bereich des Armaturenbrettes und seiner unmittelbaren Umgebung so angeordnet werden, daß sie für den Fahrer ohne weiteres direkt zugänglich und betätigbar sind. Andererseits sind die Verbraucher aufgrund ihrer jeweiligen Funktion in unvermeidlicher Weise über das gesamte Fahrzeug verteilt angeordnet. Dies alles hat zur Folge, daß die Verbraucher-Anschlußleitungen der einzelnen Verbraucher auf teilweise sehr langen und komplizierten Wegen vom Verbraucher zum Betriebszustandsschalter und von diesem zum Sicherungskasten geführt werden müssen und erst hinter dem Sicherungskasten in die gemeinsame, zur Spannungsquelle führende Haupt-Anschlußleitung einmünden können. Dies führt zu einer außerordentlich aufwendigen und unübersichtlichen Leitungsführung mit einer Vielzahl von Kabelbäumen, die insbesondere bei modernen Kraftfahrzeugen mit einer zunehmenden Anzahl von Verbrauchern zu immer größeren Herstellungs-, Wartungs- und Reparaturkosten führen.

Ein weiterer Nachteil dieser bekannten Schaltungsanordnungen ergibt sich aus der Tatsache, daß es in solchen Bordnetzen häufig zu sogenannten "Überspannungs- oder "Kurzschluß-Wischern" kommt, aufgrund derer kurze Stromspitzen, die zu einem der gerade eingeschalteten Verbraucher fließen, eine solche Größe erreichen, daß die zugehörige Schmelzsicherung durchbrennt. Dies hat zur Folge, daß der betreffende Verbraucher so lange ausfällt, bis die Sicherung erneuert ist, wobei sich im allgemeinen herausstellt, daß nach Einsetzen einer neuen Sicherung keine Störung mehr vorhanden ist, so daß der Verbraucher ohne weitere Maßnahmen wieder in regulärer Weise betrieben werden kann.

Aus der DE-A-33 38 764 ist eine Schaltungsanordnung der eingangs genannten Art bekannt, bei der die Problematik der komplizierten und aufwendigen Verdrahtung einer Vielzahl von Verbrauchern, ihrer Betriebszustandsschalter und ihrer Sicherungen in einem Kfz-Bordnetz dadurch beseitigt wird, daß als Betriebszustandsschalter steuerbare Schalter, nämlich leistungsstarke Feldeffekt-Transistoren vorgesehen werden, von denen jeder gemeinsam mit einer Steuer- und Überwachungselektronik eine Empfängerstufe bildet, die dezentral in der Nähe des oder der zugehörigen Verbraucher angeordnet werden kann. Sowohl die Leistungsversorgung der Verbraucher als auch der für ihre Betätigung und Überwachung erforderliche Informationsaustausch zwischen den einzelnen Empfängerstufen und einem Zentralsender erfolgt über eine Ringleitung, wobei der Austausch der Steuer- und und Rückmeldesignale im Multiplexverfahren erfolgt, für das nach diesem Stand der Technik sowohl der Zentralsender als auch die einzelnen Empfängerstufen jeweils programmierbare Rechner enthalten. Zur Absicherung umfaßt jede Empfängerstufe für jeden als Betriebszustandsschalter dienenden Feldeffekt-Transistor eine Abfrageschaltung, die den vom Verbraucherstrom abhängigen Spannungsabfall an der Schaltstrecke des Feldeffekt-Transistors während des Einschaltvorganges zu vorgegebenen Zeitpunkten mißt. Aus dem Über- bzw. Unterschreiten einer vorgegebenen Schaltschwelle durch den Einschaltstrom zu diesen Zeitpunkten wird auf ein einwandfreies Funktionieren des betreffenden Verbrauchers bzw. das Vorliegen eines elektrischen Defektes geschlossen. Im letzteren Fall soll der Betriebszustandsschalter des defekten Verbrauchers geöffnet und gegen einen erneuten Schließversuch gesperrt werden.

Diese bekannte Anordnung hat den Nachteil, daß an jedem einzelnen Verbraucher ein erheblicher Aufwand hinsichtlich der Strom- und Spannungsfestigkeit des jeweiligen Betriebszustandsschalters erforderlich ist, da jeder dieser Schalter in der Lage sein muß, einen bereits beträchtlich angestiegenen Kurzschlußstrom einwandfrei zu schalten. Gelingt dies nicht und legiert der betreffende Feldeffekt-Transistor durch, so bricht das gesamte System zusammen. Es kommt zu einer Leitungsunterbrechung durch Durchschmelzen an der schwächsten Stelle. Da die Lage dieser Stelle nicht eindeutig festgelegt ist, bedeutet dies neben einer erheblichen Brandgefahr und dem Gesamtausfall des Systems einen beträchtlichen Aufwand bei der Fehlersuche und Reparatur.

Demgegenüber liegt der Erfindung die Aufgabe zugrunde, eine Schaltungsanordnung der im Oberbegriff des Anspruches 1 genannten Art so weiterzubilden, daß eine extrem schnell reagierende Absicherung gegen Überströme, Überspannungen oder Kurzschlüsse mit hoher Zuverlässigkeit gewährleistet ist, ohne daß es aufgrund des Auftretens von Überspannungs- oder Kurzschluß-Wischern zu einem längeren Ausfall eines oder mehrerer Verbraucher kommt.

Zur Lösung dieser Aufgabe sieht die Erfindung die im Anspruch 1 zusammengefaßten Merkmale vor.

Durch diese erfindungsgemäßen Maßnahmen wird also nicht für jeden Verbraucher eine eigene Schmelz- oder sonstige Sicherung vorgesehen, die dann und nur dann durchbrennt bzw. die Verbindung zur Spannungsquelle unterbricht, wenn zu dem zugehörigen Verbraucher ein Überstrom fließt. Stattdessen ist in der allen Verbrauchern gemeinsamen Haupt-Anschlußleitung ein steuerbarer schneller Schutzschalter vorgesehen, der beispielsweise aus einem eine hohe Zuverlässigkeit gewährleistenden, redundanten Netzwerk von schnellen Halbleiterschaltern aufgebaut und mit einer Störschutzschaltung versehen sein kann, welche die ansonsten bei den extrem schnellen Schaltvorgängen solcher Halbleiterschalter auftretenden elektrischen Störsignale unterdrückt.

Zwar ist aus der EP-A-0 119 187 eine Schaltungsanordnung zur Stromversorgung einer Vielzahl von Verbrauchern bekannt, bei der eine in der Haupt-Anschlußleitung vorgesehene Zentral-Sicherung mit den Verbrauchern in Reihe liegt und beim Auftreten von Kurzschlüssen und Fehler- oder Überströmen automatisch geöffnet werden kann. Bei dieser Schaltungsanordnung handelt es sich aber um eine Installation zur Wechselstrom- und -Spannungsversorgung einer Vielzahl von geschalteten oder freien Stromentnahmestellen in einem Gebäude aus dem öffentlichen Stromversorgungsnetz, bei der für Bordnetze spezifische Probleme keine Rolle spielen: So steigen wegen der wesentlich längeren Leitungen und der vielen Übergangswiderstände die Kurzschlußströme in einer Gebäudeinstallation wesentlich langsamer an als in einem Bordnetz für Kraftfahrzeuge.

Aus der EP-A-0 096 601 ist ebenfalls eine nicht gattungsgemäße Schaltungsanordnung bekannt, bei der eine Vielzahl von zueinander parallelen Einzelstromkreisen über einen Hauptanschluß aus dem öffentlichen Netz mit Wechselstrom und -spannung versorgt wird. Zusätzlich zu einer in der Hauptanschlußleitung liegenden Sicherung, die ausschließlich beim Auftreten eines Kurzschlusses in einem der Einzelstromkreise anspricht, ist jeder dieser Einzelstromkreise durch eine eigene, nur auf Über- und Fehlerströme ansprechende Sicherung geschützt, die jedoch nicht mit einem Betriebszustandsschalter für einen einzelnen Verbraucher vergleichbar ist.

Entsprechendes gilt auch für die Schaltungsanordnungen, die aus den nachveröffentlichten EP-A-0 209 765 (Stand der Technik nach Artikel 54(3) EPÜ) und GB-A-21 82 812 entnehmbar sind.

Der erfindungsgemäß vorgesehene schnelle Schutzschalter kann prinzipiell selbsttätig, d.h. so ausgebildet sein, daß das Auftreten von Überspannungen und/oder Überströmen im Schutzschalter selber erkannt und dort unmittelbar in ein Signal zum kurzzeitigen Öffnen und Wiederschließen des Schutzschalters umgesetzt wird. In diesem Fall muß der schnelle Schutzschalter überdies eine Speicherschaltung umfassen, die dann, wenn die Störung nach dem kurzzeitigen Öffnen und Wiederschließen des Schalters anhält, verhindert, daß der sich erneut öffnende Schalter nochmals geschlossen wird bevor die Störung beseitigt ist.

Bei einer bevorzugten Weiterbildung ist ein vom schnellen Schutzschalter getrennt angeordneter Sensor vorgesehen, der den durch die Haupt-Anschlußleitung fließenden Strom und/oder die anliegende Spannung überwacht. Dabei kann dieser Sensor selbst "intelligent" ausgebildet sein, d.h. nicht nur Meßsignale für den Strom und/oder die Spannung erzeugen, sondern auch eine Komparatoreinrichtung umfassen, die diese Signale mit Bezugswerten vergleicht, die sie z.B. einem Festwertspeicher entnimmt, der einen Bestandteil dieser Komparatorschaltung bilden kann. Der Sensor erzeugt dann unmittelbar selbst das Steuersignal, das zum Öffnen des schnellen Schutzschalters führt.

Eine andere Möglichkeit besteht darin, daß der Sensor lediglich Meßsignale abgibt, die einer zentralen Einheit zugeführt werden, die ihrerseits diese Signale in der eben geschilderten Weise bewertet und im Gefahrenfall den schnellen Schutzschalter schnell öffnet. Diese zentrale Einheit kann dann, wenn sich nach dem ersten Öffnen und Wiederschließen des Schutzschalters zeigt, daß die Störung noch nicht verschwunden ist und der Schutzschalter sofort wieder geöffnet werden muß, das erneute Schließen des Schutzschalters verhindern.

Auch eine Kombination der eben geschilderten Möglichkeiten kann in der Weise vorgesehen sein, daß zwar ein vom Sensor abgegebenes Signal dem schnellen Schutzschalter unmittelbar zugeführt wird, um ihn im Gefahrenfall möglichst schnell zu öffnen, daß aber auch die zentrale Einheit eine entsprechende Information erhält und die weitere Steuerung übernimmt.

Allen diesen Ausführungsformen liegt die Erkenntnis zugrunde, daß es in vielen Fällen, in denen Überspannungs- oder Kurzschluß-Wischer vorliegen, genügt, wenn durch die frühzeitige Unterbrechung der Energieversorgung die Überspannung unterbrochen oder die Kurzschlußstrecke deionisiert wird, um eine derartige Störung zu beseitigen. D.h., daß häufig nach einigen Millisekunden der schnelle Schutzschalter wieder geschlossen werden kann, ohne daß es zu einem erneuten, unzulässig großen Stromanstieg kommt. Die Reaktionsgeschwindigkeit der erfindungsgemäßen Sicherungseinrichtung ist so groß, daß das extrem kurzzeitige Öffnen und Wiederschließen des schnellen Schutzschalters und die damit verbundene kurze Unterbrechung der Energiezufuhr zu den Verbrauchern deren Betrieb in keiner Weise stört und von einem menschlichen Beobachter nicht wahrgenommen werden kann.

Dauerstörungen können beispielsweise entweder in Form eines Dauerkurzschlusses vorliegen, der durch Deionisierung der Kurzschlußstrecke nicht beseitigt werden kann, oder von einem defekten Verbraucher verursacht werden, der ständig Überspannungsspitzen in das Stromversorgungsnetz einspeist. In diesen Fällen steigt nach dem Wiederschließen des schnellen Schutzschalters der zu den Verbrauchern fließende Strom in einer Weise an, daß erkennbar ist, daß der Kurzschluß weiter besteht oder es treten erneut Spannungsspitzen auf, die von dem oder den betreffenden Sensoren registriert werden. Beides wird zum Anlaß genommen, den schnellen Schutzschalter erneut schnell zu öffnen, so daß keine weiteren Schäden eintreten.

Die von den Abfrageschaltungen gelieferten Informationssignale werden unmittelbar oder mittelbar zur Steuerung des schnellen Schutzschalters und auch der Betriebszustandsschalter in der Weise verwendet, daß die Anordnung selbsttätig in der Lage ist, den defekten Verbraucher zu suchen, seinen Betriebszustandsschalter dauerhaft, d.h. bis zur Beseitigung des Kurzschlusses oder der sonstigen Störung zu öffnen und dann den schnellen Schutzschalter wieder zu schließen, so daß der Betrieb der übrigen Verbraucher nach einer sehr kurzen Unterbrechung fortgesetzt werden kann.

Prinzipiell können die elektrischen Steuersignale für die Betriebszustandsschalter jeweils unmittelbar von der bereits erwähnten zentralen Einheit geliefert werden.

Vorzugsweise wird jedoch jedem Verbraucher zum Steuern seines Betriebszustandsschalters eine Schaltelektronikeinheit zugeordnet,die auch die Abfrageschaltung umfaßt. Dies ermöglicht es, in jeder Schaltelektronikeinheit so viel "Intelligenz" vorzusehen, daß beim Auftreten eines defekten Verbrauchers jede Schaltelektronikeinheit selbst überprüft, ob ihr Verbraucher einwandfrei arbeitet oder nicht, und im letzten Fall sofort nach dem Öffnen des schnellen Schutzschalters den Betriebszustandsschalter ihres Verbrauchers öffnet. Hierzu ist es erforderlich, daß die Schaltelektronikeinheiten Informationen über den Schaltzustand des schnellen Schutzschalters erhalten und diesen zumindest indirekt steuern können.
Vorzugsweise wird jedoch der schaltungstechnische Aufwand in den Schaltelektronikeinheiten möglichst klein gehalten und die zur Steuerung der Betriebszustandsschalter und des schnellen Schutzschalters sowie zum Suchen eines defekten Verbrauchers erforderliche "Intelligenz" in der zentralen Einheit konzentriert, die beispielsweise als Microprozessor ausgebildet werden kann und dann einerseits mit Befehlstasten, die zur Vorgabe der gewünschten Betriebszustände der Verbraucher von Hand betätigt werden, und andererseits mit den Schaltelektronikeinheiten verbunden ist. An diese Schaltelektronikeinheiten sendet die zentrale Einheit Aktivierungs-, Schaltbefehls- und Steuersignale, wobei eine Schaltelektronikeinheit, die sich im aktivierten Zustand befindet, die Informationssignale der Abfrageschaltung über den Betriebszustand des zugehörigen Verbrauchers an die zentrale Einheit liefert und die von dieser empfangenen Schaltbefehlssignale in Schaltsignale zur Änderung des Schaltzustandes des zugehörigen Betriebszustandsschalters umsetzt; weiterhin überprüft bei dieser Ausführungsform die zentrale Einheit beim Auftreten eines Kurzschlusses bzw. einer Störung nach dem Öffnen des schnellen Schutzschalters selbsttätig mit Hilfe der Abfrageschaltungen in den Schaltelektronikeinheiten, bei welchem Verbraucher der Kurzschluß oder sonstige Defekt vorliegt. Wenn dieser Verbraucher gefunden ist, steuert die zentrale Einheit die zugehörige Schaltelektronikeinheit zum dauerhaften leistungsfreien Öffnen des Betriebszustandsschalters an und schließt hierauf den schnellen Schutzschalter wieder, so daß die einwandfreien Verbraucher wieder mit elektrischer Energie versorgt werden. Dies kann in einem so kurzen Zeitraum geschehen, daß die hierbei insgesamt auftretende Unterbrechung der Energiezufuhr für die einwandfreien Verbraucher ohne Auswirkungen auf deren Betrieb bleibt. Die Verbindung der Verbraucher-Anschlußleitungen mit der Haupt-Anschlußleitung erfolgt jeweils über die dem betreffenden Verbraucher zugeordnete Schaltelektronikeinheit.

Die Schaltelektronikeinheiten sind jeweils über mehrere Leitungen mit der zentralen Einheit verbunden, wobei diese Leitungen mit der zur Energieversorgung der Verbraucher dienenden Haupt-Anschlußleitung zu einem einzigen Kabel oder Kabelbaum zusammengefaßt sein können. Das Ein-, Aus- oder Umschalten der Verbraucher erfolgt mit Hilfe der Befehlstasten, von denen jeweils eine oder mehrere in eindeutiger Weise einem Verbraucher zugeordnet sind und die von Hand betätigt werden. Die Befehlstasten sind jedoch nicht direkt mit dem jeweils zugehörigen Verbraucher sondern mit der zentralen Einheit verbunden, an die sie jeweils Signale abgeben, die den gewünschten Betriebszustand des betreffenden Verbrauchers kennzeichnen. Die Gesamtheit dieser Signale wird im folgenden kurz als "Befehlsvorgabe" bezeichnet. Die zentrale Einheit kann über die erwähnten Verbindungsleitungen die einzelnen Schaltelektronikeinheiten aktivieren, von der jeweils aktivierten Schaltelektronikeinheit Informationen über den momentanen Betriebszustand des zugehörigen Verbrauchers erhalten, diese Informationen mit der Befehlsvorgabe vergleichen und gegebenenfalls bei Abweichungen Schaltbefehlssignale an die aktivierten Schaltelektronikeinheiten abgeben, durch die die Abweichung beseitigt, d.h. der Betriebszustand des jeweiligen Verbrauchers an die entsprechende Befehlsvorgabe angepaßt wird.

Da die von den Schaltelektronikeinheiten gelieferten Informationen über den Betriebszustand des jeweils zugehörigen Verbrauchers auch das Vorhandensein eines Defekts erkennen lassen, ist die zentrale Einheit z.B. beim Auftreten eines Dauerkurzschlusses in der Lage, nach Öffnen des schnellen Schutzschalters die einzelnen Schaltelektronikeinheiten der Reihe nach so lange abzufragen, bis der defekte Verbraucher gefunden ist, um dann für ein dauerhaftes Öffnen des zugehörigen Betriebszustandsschalters zu sorgen und den schnellen Schutzschalter sofort wieder zu schließen.

Bevorzugte Ausführungsformen der erfindungsgemäßen Schaltungsanordnung, mit deren Hilfe die über die zentrale Einheit laufende Betätigung der Verbraucher und insbesondere das Suchen und Herausschalten eines defekten Verbrauchers in besonders vorteilhafter Weise erfolgen kann, sind in den Unteransprüchen niedergelegt.

Hier sei zusammenfassend nur nochmals auf folgende Vorteile hingewiesen:
Die Betätigung des schnellen Schutzschalters erfolgt beim Auftreten eines Defektes so schnell, daß der durch den Schutzschalter fließende Strom noch nicht wesentlich angestiegen ist. D.h., daß der Schutzschalter bei relativ kleinen Leistungen betätigt werden kann, was seine Zuverlässigkeit und Lebensdauer erhöht. Die beim Suchen und Herausschalten eines defekten Verbrauchers an den Betriebszustandsschaltern durchzuführenden Schaltvorgänge erfolgen bei geöffnetem schnellen Schutzschalter, d.h. völlig leistungslos, so daß die Schaltkontakte dieser Schalter in keiner Weise einer erhöhten Belastung ausgesetzt werden. Das Suchen und Herausschalten eines defekten Verbrauchers kann so schnell erfolgen, daß die hierfür kurzfristig erforderliche Unterbrechung der Energiezufuhr zu den intakten Verbrauchern deren Betrieb praktisch nicht beeinträchtigt oder stört.

Die Verdrahtung bzw. Verkabelung eines derart aufgebauten Bordnetzes wird außerordentlich vereinfacht, da lediglich eine vorzugsweise als Ringleitung ausgebildete mehradrige Haupt-Anschlußleitung verlegt werden muß, an die auf der einen Seite die zentrale Einheit und die Spannungsquelle und auf der anderen Seite die Verbraucher angeschlossen sind. Der Anschluß der Verbraucher an die Haupt-Anschlußleitung erfolgt vorzugsweise derart, daß die zum Verbraucher gehörende Schaltelektronikeinheit unmittelbar an der Haupt-Anschlußleitung sitzt, mit der sie beispielsweise über einen Einstecksockel verbunden ist. Von der Schaltelektronikeinheit zum Verbraucher geht dann über eine Steckverbindung ein als Verbraucher-Anschlußleitung dienendes Kabel, das an seiner Verbraucherseite unmittelbar fest mit dem Verbraucher verbunden sein kann. Dies hat insbesondere bei Kraftfahrzeug-Bordnetzen den Vorteil, daß die bisher üblichen, am Verbraucher liegenden Steckverbindungen wegfallen, die je nach Art des Verbrauchers teilweise in einer sehr agressiven und zu starken Korrosionserscheinungen führenden Umgebung angeordnet sind. Bei einer erfindungsgemäßen Schaltungsanordnung kann diese Verbindungsstelle gegen Umwelteinflüsse völlig isoliert bzw. abgekapselt werden und die Schaltelektronikeinheit kann an einer Stelle im Kraftfahrzeug angeordnet werden, wo die zugehörige Steckverbindung einer wesentlich geringeren Umgebungsbelastung ausgesetzt ist. Insgesamt ergibt sich ein sehr geringer Verdrahtungs- und Verkabelungsaufwand, da die eine Haupt-Anschlußleitung mit ihren vergleichsweise kurzen Verbindungen zur Spannungsquelle, zur zentralen Einheit und zu den einzelnen Verbrauchern, sowie eine kurze Verbindungsleitung zwischen den Befehlstasten und der zentralen Einheit die gesamten bisher üblichen Kabelbäume vollständig ersetzen.

Aufgrund der beschriebenen Sicherungsvorrichtung kann ein aufwendiger Sicherungskasten entfallen, da es allenfalls erforderlich ist, zusätzlich in der oder den direkten Verbindungsleitungen der Haupt-Anschlußleitung zur Spannungsquelle jeweils eine Schmelzsicherung vorzusehen. Da auch bei einen sehr viele Verbraucher umfassenden Bordnetz höchstens zwei oder drei solche Verbindungsleitungen benötigt werden, und ein oder zwei Sicherungen für die Spannungsversorgungsleitungen der elektronischen Schaltungsteile erforderlich sind, ist also insgesamt die Zahl der Sicherungen erheblich verringert.

Die Erfindung wird im folgenden anhand von Ausführungsbeispielen unter Bezugnahme auf die Zeichnung beschrieben; in dieser zeigt:
- Fig. 1: eine schematische Gesamtdarstellung einer erfindungsgemäßen Schaltungsanordnung,
- Fig. 2: das schematische Blockschaltbild einer ersten Ausführungsform der Schaltelektronikeinheiten aus Fig. 1,
- Fig. 3: das schematische Blockschaltbild einer zweiten Ausführungsform der Schaltelektronikeinheiten aus Fig. 1,
- Fig. 4: das schematische Blockschaltbild einer adressierbaren Befehls-Empfangsschaltung, wie sie in den Schaltelektronikeinheiten gemäß den Fig. 2 und 3 Verwendung finden kann,
- Fig. 5: eine digitale Ausführungsform eines Impulslängendiskriminators für die adressierbaren Befehls-Empfangsschaltungen gemäß Fig. 4, und
- Fig. 6: eine Strombegrenzungs- und Pufferschaltung wie sie zur Stromversorung der zentralen Einheit und der Befehlstasten gemäß Fig. 1 sowie der Relais und der adressierbaren Befehls-Empfangsschaltungen in den Schaltelektronikeinheiten der Fig. 2 und 3 Verwendung finden kann.

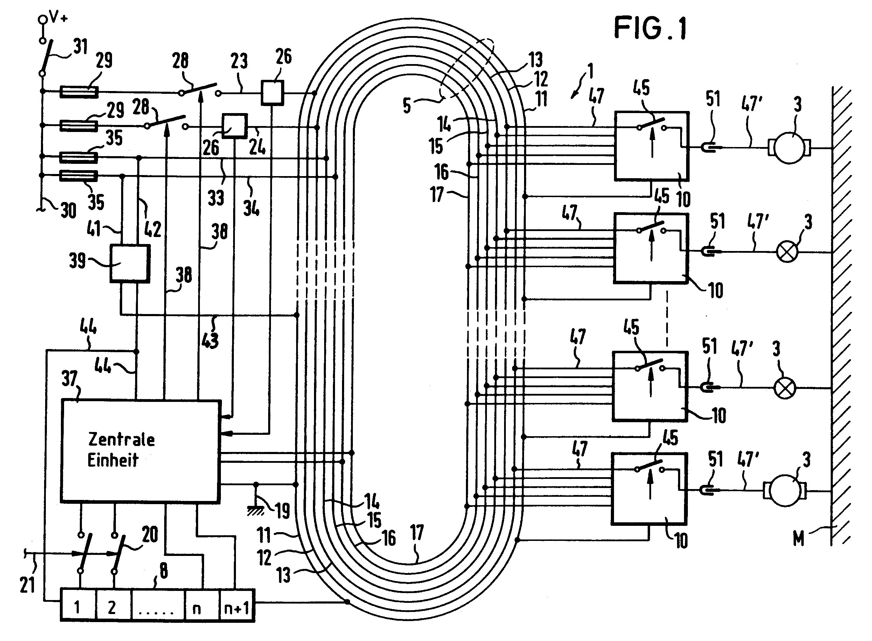

In Fig. 1 ist eine Schaltungsanordnung 1 dargestellt, mit deren Hilfe eine Vielzahl von Verbrauchern 3, von denen in Fig. 1 zwei als Motoren und zwei als Lampen dargestellt sind, aus einer gemeinsamen,im folgenden kurz als Spannungsquelle bezeichneten elektrischen Energiequelle, die durch die Systemmasse M und den positiven Spannungsanschluß V+ symbolisiert ist, über eine gemeinsame Haupt-Anschlußleitung, die in Fig. 1 als Ringleitung 5 ausgebildet ist, mit elektrischer Energie versorgt werden können. Dabei kann jeder der Verbraucher 3 durch Betätigung einer der Befehlstasten 8 wahlweise ein- bzw. ausgeschaltet werden.

Wie man der Fig. 1 entnimmt, besitzt jeder der Verbraucher 3 zwei Anschlüsse, von denen der eine unmittelbar mit der Systemmasse M verbunden ist, während der jeweils andere über einen Leitungsabschnitt 47' und eine Steckerverbindung 51 an eine dem betreffenden Verbraucher 3 zugeordnete Schaltelektronikeinheit 10 angeschlossen ist, die ihrerseits z.B. über sechs Leitungen mit den Adern 11, 12 bzw. 13 und 14 bis 17 der Ringleitung 5 verbunden ist. Bei der Ader 11 handelt es sich um eine gesonderte Elektronik-Masseleitung, die am Punkt 19 geerdet ist. Zwar ist es prinzipiell möglich, jede der Schaltelektronikeinheiten 10 und auch die übrigen elektronischen Bestandteile der Schaltungsanordnung 1 jeweils unmittelbar mit der Systemmasse M zu verbinden. In all den Fällen, in denen damit zu rechnen ist, daß auf der Systemmasse M starke Störungen auftreten, wie dies z.B. bei einem KFZ-Bordnetz der Fall ist, ist die in Fig. 1 dargestellte gesonderte Erdung über den Punkt 19 jedoch vorzuziehen.

Im allgemeinen werden die Verbraucher 3 nach unterschiedlichen Gesichtspunkten zu Gruppen zusammengefaßt. So können z.B. Verbraucher, deren Funktionsfähigkeit von gesteigerter Bedeutung ist, eine Gruppe bilden, während Verbraucher, deren Funktionsfähigkeit weniger wichtig ist, eine zweite Gruppe bilden. Im Falle eines KFZ-Bordnetzes sind Verbraucher der ersten Gruppe z.B. die Zündanlage, Scheinwerfer, Einspritzpumpe usw., während zur zweiten Verbrauchergruppe z.B. elektrische Fensterheber, Zigarrenanzünder, Signalhorn usw. gehören. Ein anderer Gesichtspunkt, nach dem die Verbraucher 3 in verschiedene Gruppen eingeteilt werden können, besteht z.B. darin, ob es immer oder nur dann möglich sein soll, einen bestimmten Verbraucher 3 einzuschalten, wenn ein Betriebs-Hauptschalter 20 geschlossen ist. Im Falle eines KFZ-Bordnetzes handelt es sich bei dem Betriebs-Hauptschalter 20 z.B. um den in der "Zündung-Ein"-Stellung geschlossenen Zündschloß-Schalter, der durch den in Fig. 1 durch die Pfeile 21 symbolisierten Zündschlüssel betätigt wird. Zu den Verbrauchern, die unabhängig vom Betriebs-Hauptschalter 20 betätigbar sein sollen, gehören in diesem Fall z.B. die Warnblinkanlage, das Standlicht, die Parkleuchten, das Rundfunkgerät, das Gebläse, die Heckscheibenheizung, die Innenraumbeleuchtung usw., während zu den Verbrauchern, die nur bei geschlossenem Betriebs-Hauptschalter mit Energie versorgbar sein sollen, die Zündanlage, das Signalhorn, die Fern- und Nebelscheinwerfer usw. gehören.

Selbstverständlich kann es bei den eben genannten verschiedenen Kriterien zu Überschneidungen kommen, so daß ein und derselbe Verbraucher 3 zu verschiedenen Gruppen gehört.

Je nach konkretem Anwendungsfall kann es zweckmäßig sein, die Haupt-Anschlußleitungen für die Verbraucher verschiedener Gruppen voneinander getrennt zu halten. Um dies zu verdeutlichen, ist in Fig. 1 angenommen, daß die beiden unteren Verbraucher 3 zu einer Gruppe gehören, die über die Ader 12 der Ringleitung 5 mit positiver Spannung versorgt wird, während die beiden oberen Verbraucher 3 zu einer anderen Gruppe gehören, deren Spannungsversorgung über die Ader 13 der Ringleitung 5 erfolgt. Zu diesem Zweck sind die Adern 12 bzw. 13 jeweils mit einer Spannungs-Versorgungsleitung 23 bzw. 24 verbunden, die jeweils über einen Sensor 26, einen schnellen Schutzschalter 28 und eine Schmelzsicherung 29 zu einer Leitung 30 führen, die über einen Wartungsschalter 31 mit dem Spannungsanschluß V+, z.B. mit dem positiven Pol der KFZ-Batterie, verbunden ist. Der Wartungsschalter 31 dient dazu, im Bedarfsfall, z.B. bei Wartungs- oder Reparaturarbeiten, das gesamte Bordnetz strom- und spannungslos zu machen.

Nimmt man z.B. an, daß die Verbraucher 3 der in Fig. 1 oberen Gruppe mit erhöhter Zuverlässigkeit funktionstüchtig bleiben müssen, während an die Zuverlässigkeit der Spannungsversorgung der in Fig. 1 unteren Verbrauchergruppe geringere Anforderungen zu stellen sind, so können die beiden Haupt-Anschluß-Leitungssysteme 12, 23 bzw. 13, 24 so miteinander vermascht werden, daß die Verbraucher 3 der oberen Gruppe auch dann noch über die Spannungsversorgungsleitung 24 mit elektrischer Energie versorgt werden können, wenn der schnelle Schutzschalter 28 in der Spannungsversorgungsleitung 23 aufgrund eines Defektes nicht mehr geschlossen werden kann, wenn die in der Leitung 23 angeordnete Schmelzsicherung 29 durchgebrannt ist, oder wenn der Betriebszustandsschalter 45 nicht mehr funktioniert.

Aus Zuverlässigkeits- und Störsicherheits-Gründen ist die Spannungsversorgung der Schaltelektronikeinheiten 10 von der Spannungsversorgung für die Verbraucher 3 getrennt und überdies doppelt vorhanden. Zu diesem Zweck umfaßt die Ringleitung 5 die beiden Adern 14 und 15, an die die Schaltelektronikeinheiten 10 angeschlossen sind und die ihrerseits über die Spannungsversorgungsleitungen 33, 34 mit der Leitung 30 verbunden sind. Da jede der Schaltelektronikeinheiten 10 einen im Vergleich zur Stromaufnahme der Verbraucher 3 außerordentlich kleinen Versorgungsstrom benötigt, können hier gegen Kurzschlüsse weiter unten beschriebene besondere Maßnahmen ergriffen werden, aufgrund derer es ausreicht, in den Spannungsversorgungsleitungen 33, 34 jeweils nur eine Schmelzsicherung 35 vorzusehen, die im wesentlichen dann anspricht, wenn z.B. bei einem Unfall die Isolation einer der Adern 14, 15 oder der Leitungen 33, 34 zerstört und dabei ein direkter Massekontakt hergestellt wird.

Die Schaltungsanordnung 1 umfaßt weiterhin eine im folgenden kurz als zentrale Einheit 37 bezeichnete zentrale Meß-, Kontroll- und Steuereinheit, die als wesentlichen Bestandteil z.B. einen Mikroprozessor aufweisen kann. Einerseits steht die zentrale Einheit 37 entweder direkt oder über die Kontakte des Betriebs-Hauptschalters 20 mit den Befehlstasten 8 in Verbindung, von denen sie eine Befehlsvorgabe, d.h. Signale empfängt, die ihr anzeigen, welche Verbraucher eingeschaltet oder ausgeschaltet oder in einen von mehreren Betriebszuständen gebracht und im jeweiligen Betriebszustand gehalten werden sollen.

Um diese Steuerfunktion ausüben zu können, ist die zentrale Einheit 37 andererseits über die beiden Adern 16 und 17 der Ringleitung 5 mit sämtlichen Schaltelektronikeinheiten 10 verbunden, von denen jede unter anderem einen in der Verbraucher-Anschlußleitung 47 des zugehörigen Verbrauchers liegenden Betriebszustandsschalter 45 umfaßt, mit dessen Hilfe der Verbraucher 3 ein- oder ausgeschaltet oder in einen bestimmten von mehreren Betriebszuständen gebracht werden kann. Dabei dient die Ader 16 als Steuerleitung, auf der die zentrale Einheit 37 an die Schaltelektronikeinheiten 10 Adressensignale zur Anwahl und Aktivierung einzelner Schaltelektronikeinheiten 10, Schaltbefehlssignale zur Betätigung des in der jeweils aktivierten Schaltelektronikeinheit angeordneten Betriebszustandsschalters 45 und somit zum Ein-, Aus- oder Umschalten des zugehörigen Verbrauchers 3 sowie Steuersignale aussendet, die z.B. dazu dienen, zu bestimmten Zeitpunkten die in den Schaltelektronikeinheiten 10 befindlichen elektronischen Schaltungen in einen definierten Zustand zu bringen.

Die Ader 17 dient dagegen als Datenleitung, auf der z.B. die jeweils gerade aktivierte Schaltelektronikeinheit 10 an die zentrale Einheit 37 ein Informationssignal überträgt, das den momentanen Betriebszustand des zugehörigen Verbrauchers 3 kennzeichnet. Auch kann auf dieser Ader 17 z.B. ein Teststrom von der zentralen Einheit 37 an eine aktivierte Schaltelektronikeinheit 10 übertragen werden, mit dessen Hilfe erkannt werden kann, ob der der betreffenden Schaltelektronikeinheit 10 zugeordnete Verbraucher 3 einen Defekt aufweist oder nicht. Dies wird weiter unten noch genauer erläutert.

Um generell das Auftreten eines Defektes erkennen und daraufhin entsprechende Maßnahmen durchführen zu können, ist die zentrale Einheit 37 mit den Sensoren 26 verbunden, von denen sie z.B. ein Signal erhält, das den Strom kennzeichnet, der zu den Verbrauchern 3 der zugehörigen Gruppe fließt. Die zentrale Einheit 37 kann die Größe oder den zeitlichen Gradienten dieses Stromes auswerten, um sehr schnell, d.h. innerhalb einiger Mikrosekunden festzustellen, daß in der dem betreffenden Sensor 26 nachgeordneten Verbrauchergruppe ein Defekt, beispielsweise ein Kurzschluß aufgetreten ist. Da die Größe des zu einem gegebenen Zeitpunkt zu einer Verbrauchergruppe fließenden Stromes von der Anzahl und der Art sowie gegebenenfalls vom Betriebszustand der momentan in dieser Verbrauchergruppe eingeschalteten Verbraucher 3 abhängt, kann die zentrale Einheit 37 die ihr vorliegende Information über die eingeschalteten Verbraucher auswerten, um den zugehörigen Strom-Sollwert aus einem Speicher abzurufen und den momentanen Istwert dieses Stroms mit dem Sollwert zu vergleichen. Entsprechendes gilt für den zeitlichen Stromgradienten, der dann, wenn entsprechende Verbraucher wie z.B. Glühlampen eingeschaltet werden, kurzfristig sehr große Werte annehmen kann. Da der Einschaltvorgang derartiger Verbraucher aber von der zentralen Einheit 37 her gesteuert wird, ist diese entsprechend informiert und kann einen solchen kurzfristig hohen Stromgradienten richtig interpretieren. Es ist auch möglich, zuvor ermittelte, für den Einschaltvorgang bestimmter Verbraucher charakteristische Strom- oder Stromgradienten-Kurven zu speichern und diesen Kurvenverlauf von der zentralen Einheit 37 jeweils beim Einschalten überwachen zu lassen, um aus signifikanten Abweichungen zu erkennen, wenn z.B. ein Kurzschluß bei einem Verbraucher gerade im Augenblick des Einschaltens auftritt. Wird von der zentralen Einheit 37 aus dem Signal eines der Sensoren 26 erkannt, daß in der diesem Sensor nachgeordneten Verbrauchergruppe ein Defekt aufgetreten ist, so öffnet die zentrale Einheit 37 als Sofortmaßnahme den schnellen Schutzschalter 28 der betreffenden Verbrauchergruppe, der vorzugsweise als redundantes Netzwerk aus extrem schnellen Halbleiterschaltern aufgebaut ist, die auf das von der zentralen Einheit 37 über die zugehörige Leitung 38 kommende Steuersignal so schnell reagieren, daß sie rechtzeitig öffnen, bevor der aufgrund des Defektes ansteigende, durch sie hindurchfließende Strom einen gefährlichen oder gar zu Zerstörungen führenden Wert erreicht hat. Da in derartigen Schaltungsanordnungen mit einer Vielzahl unterschiedlicher Verbraucher, insbesondere in KFZ-Bordnetzen, sehr häufig sogenannte Kurzschluß-Wischer auftreten, die von selbst wieder verschwinden, wenn die Kurzschlußstrecke durch eine kurze Stromunterbrechung deionisiert worden ist, schließt die zentrale Steuerung 37 den gerade geöffneten schnellen Schutzschalter 28 nach einigen Millisekunden versuchsweise wieder, und überprüft mit Hilfe des zugehörigen Sensors 26, ob der Kurzschluß inzwischen verschwunden ist. Dies wird sehr häufig der Fall sein. Ist der Kurzschluß oder ein sonstiger Defekt jedoch nicht von selbst verschwunden, so öffnet die zentrale Einheit 10 den schnellen Schutzschalter 28 wieder unverzüglich und ergreift weitere Maßnahmen, um den Verbraucher 3,an dem die Dauerstörung aufgetreten ist, mit Hilfe der Schaltelektronikeinheiten 10 zu finden und bis zur Beseitigung der Störung durch entsprechende Betätigung des zugehörigen Betriebszustandsschalters 45, die aufgrund der beschriebenen Anordnung im strom- und spannungslosen Zustand erfolgt, von der Spannungsquelle so abzutrennen, daß sie den schnellen Schutzschalter 28 wieder schließen kann, wodurch die nicht defekten Verbraucher 3 wieder mit Spannung versorgt werden. Die zum Auffinden des defekten Verbrauchers 3 vorgesehenen Maßnahmen werden weiter unten ausführlich erläutert. Hier sei lediglich darauf hingewiesen, daß sie in jedem Fall von der zentralen Einheit 37 so schnell, beispielsweise innerhalb einiger Millisekunden durchgeführt werden können, daß es zu keiner merklichen Unterbrechung des Betriebs der nicht defekten, gerade eingeschalteten Verbraucher 3 kommt. So ist die Zeit, in der der schnelle Schutzschalter 28 zwischen dem ersten Auftreten eines Defektes und dem Auffinden und leistungslosen Herausschalten des defekten Verbrauchers geöffnet bleibt, selbst bei großen Systemen, die viele Verbraucher 3 an einer gemeinsamen Spannungsversorgungsleitung 23 umfassen, so kurz, daß sich die hierdurch bewirkte Stromunterbrechung weder durch ein Flackern eventuell als Verbraucher 3 vorhandener Lampen, noch in einer Laufunterbrechung von Motoren noch in ähnlicher Weise bei anderen Arten von Verbrauchern bemerkbar macht.

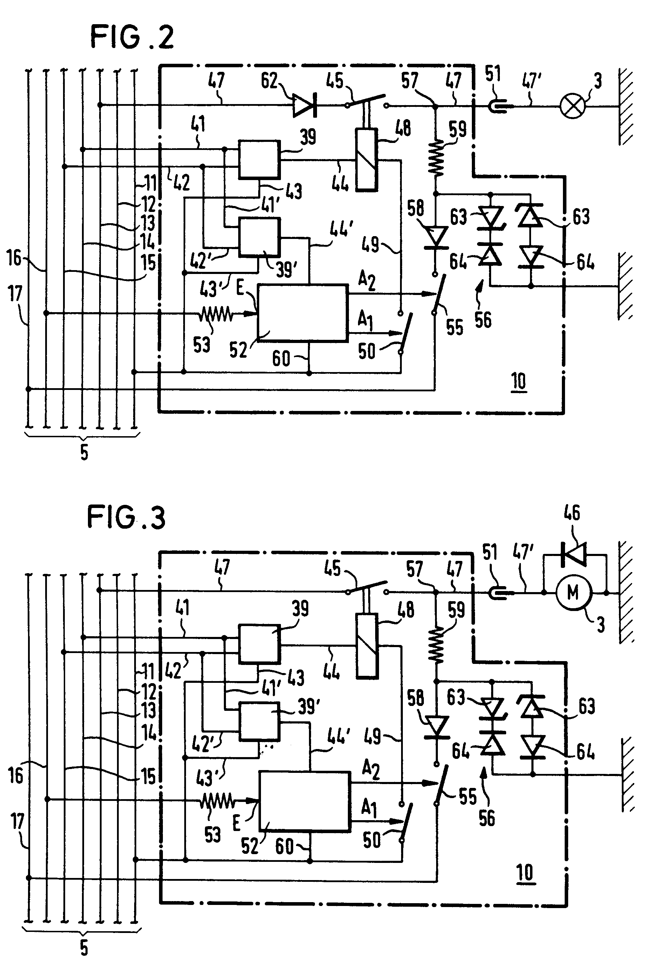

Schließlich zeigt die Fig. 1 noch eine Strombegrenzungs- und Pufferschaltung 39, die aus Zuverlässigkeitsgründen in redundanter Weise mit zwei Eingangsleitungen 41, 42 hinter den Sicherungen 35 an die Spannungsversorgungsleitungen 33, 34 für die Elektronikschaltungen der Schaltungsanordnung 1 angeschlossen ist. Über eine Leitung 43 ist die Strombegrenzungs- und Pufferschaltung 39 mit der als Elektronik-Masseleitung dienenden Ader 11 der Ringleitung 5 verbunden. Über eine Ausgangsleitung 44 versorgt die Strombegrenzungs- und Pufferschaltung 39 sowohl die zentrale Einheit 37 als auch die Befehlstasten 8 mit Betriebsspannung. Da auch die Schaltelektronikeinheiten 10 derartige Strombegrenzungs- und Pufferschaltungen 39 (siehe Fig. 2 und 3) umfassen, werden diese weiter unten unter Bezugnahme auf Fig. 6 genauer beschrieben.

In Abweichung von dem in Fig. 1 dargestellten Ausführungsbeispiel kann die mehradrige Leitung, die die Schaltelektronikeinheiten 10 mit den Spannungsversorgungsleitungen 23, 24 und 33, 34 sowie mit der zentralen Einheit 37 verbindet, auch als lineare, d.h. nicht zu einem Ring geschlossene Leitung ausgebildet sein, oder es können von einer Ringleitung lineare Leitungen abgezweigt sein, an die jeweils mehrere Schaltelektronikeinheiten 10 angeschlossen sind. Die in Fig. 1 dargestellte Ausbildung als Ringleitung 5 wird jedoch bevorzugt, weil die Funktionsfähigkeit des Gesamtsystems selbst dann vollständig erhalten bleibt, wenn die Ringleitung 5 an einer beliebigen Stelle völlig unterbrochen wird.

Zur Erhöhung der Betriebssicherheit des gesamten Systems kann vorgesehen sein, daß zumindest einige der Schaltelektronikeinheiten 10 zwei Betriebszustandsschalter umfassen, von denen im geschlossenen Zustand der eine den zugehörigen Verbraucher 3 mit der Ader 12 und der andere mit der Ader 13 der Hauptanschlußleitung 5 verbindet. Der eine dieser beiden Betriebszustandsschalter wird dabei als "normaler" Arbeits-Betriebszustandsschalter verwendet, während der andere im Stand-By-Betrieb bis auf weiteres ständig geöffnet bleibt. Sollte sich der normale Arbeits-Betriebszustandsschalter aufgrund eines Defektes nicht mehr schließen lassen, so kann der betreffende Verbraucher mit Hilfe des Reserve-Betriebszustandsschalters weiterhin betätigt werden. Kann dagegen der normale Arbeits-Betriebszustandsschalter nicht mehr geöffnet werden, so öffnet die zentrale Einheit 37 den zugehörigen schnellen Schutzschalter 28 auf Dauer, so daß die betreffende Ader 12 oder 13 der Hauptanschlußleitung 5 ständig stromlos wird. Alle über ihre Arbeits-Betriebszustandsschalter an diese stillgelegte Ader angeschlossenen Verbraucher 3 können dann durch Ansteuerung ihres Reserve-Betriebszustandsschalters in der jeweils gewünschten Weise weiter betrieben werden. Zu diesem Zweck muß die jeweilige Schaltelektronikeinheit 10 so ausgebildet sein, daß aufgrund entsprechender Informations- und Befehlssignale der zentralen Einheit 37 eine getrennte Ansteuerung der beiden Betriebszustandsschalter möglich ist.

In Erweiterung des in Fig 1 dargestellten Systems ist es möglich, zusätzlich Schaltelektronikeinheiten 10 vorzusehen, die nicht dazu dienen, mit Hilfe eines in ihnen enthaltenen Betriebszustandsschalters den Betriebszustand eines zugeordneten Verbrauchers 3 zu verändern. Diese Schaltelektronikeinheiten dienen Vielmehr dazu, dann, wenn sie durch entsprechende Befehlssignale der zentralen Einheit 37 angewählt sind, digitale oder analoge Meßsignale eines ihnen jeweils zugeordneten Meßfühlers über die als Datenleitung dienende Ader 17 der Leitung 5 an die zentrale Einheit 37 zu übertragen, wo diese Signale weiter ausgewertet werden können. Für den Fall eines KFZ-Bordnetzes kann es sich bei diesen Meßdaten beispielsweise um die Drehzahl des Motors, die Temperatur des Kühlerwassers, die Spannung im Bordnetz usw. handeln.

In den Fig. 2 und 3 sind zwei verschiedene bevorzugte Ausführungsformen der Schaltelektronikeinheiten 10 dargestellt. Da beide Ausführungsformen in ihrem Aufbau weitgehend übereinstimmen und sich hauptsächlich hinsichtlich ihrer Funktionsweise voneinander unterscheiden, werden ihre Bestandteile im folgenden gemeinsam beschrieben.

Wie man den Fig. 2 und 3 entnimmt, umfaßt jede Schaltelektronikeinheit 10 einen Betriebszustandsschalter 45, der zwischen die mit der Spannungsquelle in Verbindung stehende Ader 13 und den zugeordneten Verbraucher 3 geschaltet ist, bei dem es sich in Fig. 2 um eine Glühlampe und in Fig. 3 um einen Motor mit paralleler Leerlaufdiode 46 handelt. Diese Zuordnung von Verbrauchern 3 ist jedoch willkürlich und jede der beiden dargestellten Arten von Schaltelektronikeinheiten 10 ist zur Ansteuerung verschiedenster Verbraucher geeignet.

In beiden Fällen wird der Betriebszustandsschalter 45 von einem einfachen Ein/Aus-Kontakten eines selbsthaltenden Relais 48 gebildet, mit dessen Hilfe der zugehörige Verbraucher 3 entweder ein- oder ausgeschaltet werden kann. Als Alternative kann hier auch ein Umschalter verwendet werden, der sich in jedem seiner mehreren Schaltzustände selbst hält und mit dessen Hilfe der nachgeordnete Verbraucher 3 in verschiedene Betriebszustände gebracht werden kann. So ist es z.B. denkbar, auf diese Weise einen Gebläsemotor auf unterschiedliche Leistungsstufen zu schalten. Wesentlich ist immer, daß es einen Schaltzustand des Betriebszustandsschalters 45 gibt, in dem der nachfolgende Verbraucher 3 von der Spannungsversorgung getrennt ist. Dadurch kann ein Verbraucher 3, wenn an ihm eine Störung auftritt, mit Hilfe des zugehörigen Betriebszustandsschalters 45 individuell von der Spannungsversorgung abgetrennt werden, bis der Defekt behoben ist; das übrige System bleibt dabei voll einsatzfähig.

Das Konzept ermöglicht es, als Betriebszustandsschalter 45 mechanische Schaltkontakte zu verwenden, die neben geringen Kosten die Vorteile einer hohen Zuverlässigkeit und einer völligen galvanischen Trennung der beiden Schaltkontakte im geöffneten Zustand aufweisen. Der scheinbare Nachteil einer geringeren Schaltgeschwindigkeit wird durch das Konzept ausgeglichen, beim Auftreten eines Defektes wie z.B. eines Kurzschlusses, bei dem aus Sicherheitsgründen sehr schnell geschaltet werden muß, die Betriebszustandsschalter 45 zunächst geschlossen zu lassen und statt dessen den schnellen Schutzschalter 28 zu öffnen. Da dieser schnelle Schutzschalter 28 für eine ganze Gruppe von Verbrauchern 3 nur ein einziges Mal benötigt wird, führt es kostenmäßig zu keinen Nachteilen, wenn dieser schnelle Schutzschalter zur Erzielung der erforderlichen Zuverlässigkeit entsprechend redundant aufgebaut und mit einer Störschutzschaltung versehen wird, welche die aufgrund des sehr schnellen Arbeitens dieses Schutzschalters 28 möglichen elektrischen Störsignale unterdrückt.

Die Stromversorgung der Relais 48 erfolgt über die Ausgangsleitung 44 einer Strombegrenzungs- und Pufferschaltung 39, die über ihre beiden Eingangsleitungen 41, 42 mit den Adern 14 und 15 der Ringleitung 5 verbunden ist, welche als redundante Spannungsversorgungsleitungen für die Teile der Schaltungsanordnung 1 dienen, die im Gegensatz zu den Verbrauchern 1 nur eine geringe Leistungsaufnahme besitzen. Über die Leitung 43 ist die Strombegrenzungs- und Pufferschaltung 39 mit der als Elektronik-Masse dienenden Ader 11 der Ringleitung 5 verbunden, an die auch die Masseleitung 49 des Relais 48 angeschlossen ist.

In dieser Masseleitung 49 ist ein hier vereinfacht dargestellter steuerbarer Ein/Aus-Schalter 50 angeordnet, der z.B. von einem MOS-Feldeffekttransistor gebildet werden kann und der im Ruhezustand geöffnet ist. Durch kurzzeitiges Schließen dieses Ein/Aus-Schalters 50 wird an das selbsthaltende Relais 48 ein Versorgungsspannungsimpuls gelegt, der es veranlaßt, von dem bisher eingenommenen Schaltzustand in den entgegengesetzten Schaltzustand zu kippen, in dem es solange bleibt, bis durch erneutes Schließen und wieder Öffnen des Ein/Aus-Schalters 50 ein weiterer Versorgungsspannungsimpuls angelegt wird. Auf diese Weise können die den Betriebszustandsschalter 45 bildenden Relaiskontakte mit Hilfe eines kurzen Schaltsignals, das an den Steuereingang des Ein/Aus-Schalters 50 angelegt wird, je nach dem vorausgehenden Schaltzustand entweder geöffnet oder geschlossen werden.

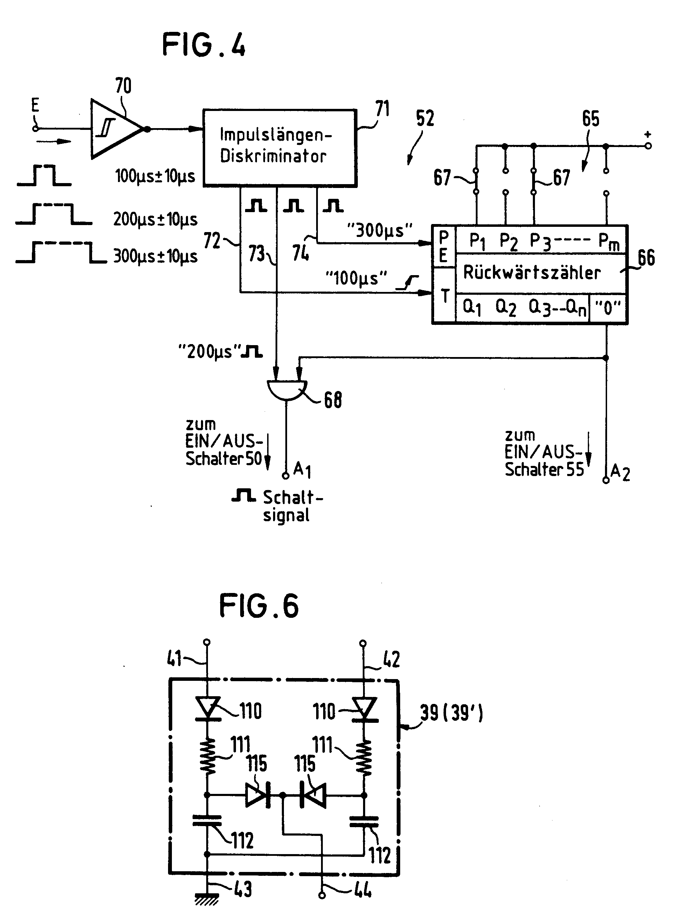

Die Ansteuerung des Ein/Aus-Schalters 50 erfolgt über einen Ausgang A₁ einer adressierbaren Befehls-Empfangsschaltung 52, deren bevorzugter Aufbau und Funktionsweise weiter unten unter Bezugnahme auf Fig. 4 genauer erläutert werden. Im vorliegenden Zusammenhang genügen die Aussagen, daß die adressierbare Befehlsempfangsschaltung 52 einen Befehlseingang E besitzt, der über einen Schutzwiderstand 53 mit der als Steuerleitung dienenden Ader 16 in Verbindung steht, auf der die zentrale Einheit 37 die erwähnten Adressensignale zur Aktivierung jeweils einer einzelnen Schaltelektronikeinheit 10, Schaltbefehlssignale für die Betätigung der Betriebszustandsschalter 45 und Steuersignale für die adressierbare Befehlsempfangsschaltung 52 selbst aussendet. Diese in kodierter Form übertragenen Signale werden von den adressierbaren Befehlsempfangsschaltungen 52 der Schaltelektronikeinheiten 10 empfangen, dekodiert und der jeweils gewünschten Verwendung zugeführt.

Der Schutzwiderstand 53 dient dazu, für den Fall, daß es im Inneren der adressierbaren Befehlsempfangsschaltung 52 z.B. durch das Durchlegieren eines elektrischen Bauelementes zu einem Kurzschluß des Einganges E auf Masse kommen sollte, den in diesen Eingang hineinfließenden Strom auf einen so kleinen Wert zu begrenzen, daß es nach wie vor möglich bleibt, über die Ader 16 die übrigen Befehlsempfangsschaltungen 52 weiterhin ordnungsgemäß anzusteuern, so daß der Ausfall der einen Schaltelektronikeinheit 10 die Funktionstüchtigkeit des übrigen Systems nicht beeinträchtigt.

Die adressierbare Befehlsempfangsschaltung 52 besitzt einen zweiten Ausgang A₂, an dem immer dann ein Ausgangssignal erscheint, wenn die adressierbare Befehlsempfangsschaltung 52 von der zentralen Einheit 37 her aktiviert worden ist. Dieses Ausgangssignal wird an den Steuereingang eines normalerweise offenen zweiten Ein/Aus-Schalters 55 gelegt, der ebenfalls mit Hilfe eines MOS-Feldeffekttransistors realisiert werden kann. Aufgrund des eben erwähnten Ausgangssignals schließt sich der Ein/Aus-Schalter 55 und verbindet einen Testpunkt 57 der Spannungs-Anschlußleitung 47 des zugehörigen Verbrauchers 3, der zwischen diesem Verbraucher und dem Betriebszustandsschalter 45 liegt, über einen Widerstand 59 und eine mit dem Widerstand 59 in Reihe liegende Diode 58 mit der als Datenleitung dienenden Ader 17, die zur zentralen Einheit 37 führt. Somit ist bei geschlossenem Schalter 55, d.h. bei angewählten Schaltelektronikeinheit 10, die zentrale Einheit 37 in der Lage, entweder die am Testpunkt 57 herrschende Spannung abzugreifen und somit eine Information darüber zu erhalten, ob der zugehörige Verbraucher ein- oder ausgeschaltet oder in einem anderen Betriebszustand ist, oder in den Verbraucher 3 einen zur Masse fließenden Teststrom vorgebbarer Größe, z.B. von 1 mA, einzuprägen, um an der hierfür erforderlichen Spannung erkennen zu können, ob an dem Verbraucher 3 bzw. zwischen dem Testpunkt 57 und der Verbrauchermasse ein Defekt wie z.B. ein Kurzschluß vorhanden ist oder nicht. Dieser Testrom wird insbesondere dann, wenn kein Kurzschluß vorhanden ist, bei geöffnetem Betriebszustandsschalter z.B. dazu verwendet, die Funktionstüchtigkeit des jeweiligen Verbrauchers 3 zu überprüfen.

Die Diode 58 erfüllt folgenden Zweck: Wenn sich aufgrund eines Defektes in einer der Schaltelektronikeinheiten 10 der Ein/Aus-Schalter 55 nicht mehr öffnen läßt, so würde dies bei geöffnetem zugehörigem Betriebszustandsschalter 45 ohne die Diode 58 einen Kurzschluß zwischen der als Datenleitung dienenden Ader 17 und der Verbrauchermasse bedeuten, da die auf der Datenleitung fließenden Ströme so klein sind, daß sie beim Abfließen über einen Verbraucher 3 dort keinen wesentlichen Spannungsabfall erzeugen. Ist dagegen in einer Schaltelektronikeinheit 10, bei der sich der Ein/Aus-Schalter 55 nicht mehr öffnen läßt, der zugehörige Betriebszustandsschalter 45 geschlossen, so würden ohne die Dioden 58 alle nicht eingeschalteten Verbraucher 3 beim Schließen ihres zugehörigen Ein/Aus-Schalters 55, das regelmäßig zur Abfrage ihres Betriebszustandes erfolgt, über die Datenleitung 17 mit der Verbraucher-Spannungsversorgung verbunden und es könnten hier erhebliche Ströme im Niederleistungsbereich der Schaltungsanordnung fließen. In beiden Fällen würde also der Ausfall eines einzigen Ein/Aus-Schalters 55 das gesamte System lahmlegen oder in seiner Funktion zumindest erheblich beeinträchtigen. Dies wird durch die Dioden 58 verhindert.

Der mit der Diode 58 in Reihe liegende Widerstand 59 dient dazu, den von der Spannungsversorgung für die Verbraucher 3 in die Datenleitung und zur zentralen Einheit 37 fließenden Strom auf einen unkritischen Wert zu begrenzen, wenn es in der zentralen Einheit 37 oder an der Datenleitung zu einem Kurzschluß auf Masse kommt.

Zwischen dem Widerstand 59 und der Diode 58 ist eine Abzweigung vorgesehen, die über eine Schaltungsanordnung 56 zum Abschneiden von Spannungsspitzen zur Systemmasse führt. Diese Schaltungsanordnung 56 umfaßt zwei zueinander parallele Zweige, von denen jeder eine Zener-Diode und eine mit dieser Zener-Diode in Reihe liegende Diode 64 umfaßt, deren Durchlaßrichtung der Durchlaßrichtung der Zener-Diode 63 entgegengesetzt ist. Die Durchlaßrichtungen der beiden Zener-Dioden 63 sind zueinander ebenfalls antiparallel. Auf diese Weise kann die Schaltungsanordnung 56 sowohl positive als auch negative Spannungsspitzen, die unter Umständen auf der Leitung 47, 47' auftreten, abschneiden und den Schalter 55 und die Eingänge der zentralen Einheit 37 gegen solche Überspannungen schützen, wobei die Zener-Dioden 63 aufgrund ihrer entsprechend gewählten Durchbruchspannungen als die eigentlichen Spannungsbegrenzer wirken, während die Dioden 64 verhindern, daß die Zener-Dioden in Vorwärtsrichtung einen Kurzschluß zur Masse herstellen.

Die Spannungsversorgung der adressierbaren Befehlsempfangsschaltung 52 erfolgt über eine weitere Strombegrenzungs- und Pufferschaltung 39', die über ihre Eingangsleitung 41', 42' an die Adern 14 und 15 und über ihre Masseleitung 43' an die Ader 11 angeschlossen ist. Ihre Ausgangsleitung 44' legt Betriebsspannung an die adressierbare Befehlsempfangsschaltung 52, die mit ihrer Masseleitung 60 ebenfalls an die Masseader 11 angeschlossen ist.

Der schaltungstechnische Unterschied zwischen den beiden in den Fig. 2 und 3 dargestellten Ausführungsformen einer Schaltelektronikeinheit 10 besteht in der Diode 62, die in Fig. 2 mit dem Betriebszustandsschalter 45 in Reihe geschaltet ist und in Fig. 3 fehlt. Abgesehen davon, daß die Diode 62 die Verwendung einer Leerlaufdiode 46 bei Anschluß an einen induktiven Verbraucher 3 überflüssig macht, ergeben sich aus diesem vergleichsweise geringen schaltungstechnischen Unterschied beträchtliche Unterschiede hinsichtlich der möglichen Betriebsarten dieser beiden Ausführungsformen, wie dies weiter unten noch genauer erläutert wird.

Als Alternative sei noch angemerkt, daß der Betriebszustandsschalter 45 statt durch Relaiskontakte auch mit Hilfe eines optisch gesteuerten Leistungs-MOS-Schalters realisiert werden kann.

Eine weitere Alternative zu den in den Fig. 1 bis 3 dargestellten Ausführungsbeispielen besteht darin, daß die Ringleitung 5 eine zusätzliche Ader besitzt, die ausschließlich dazu dient, beim Suchen nach dem Ort eines aufgetretenen Defektes in die Testpunkte 57 einen Prüfstrom einzuprägen. Diese Ader muß dann in jeder Schaltelektronikeinheit 10 über einen eigenen, dem Ein/Aus-Schalter 55 entsprechenden Schalter mit dem zugehörigen Testpunkt 57 verbindbar oder über eine rückkopplungsfreie Verbindung mit der Ader 17 verbunden sein, die dann ausschließlich zur Übertragung von Informationen von den Verbrauchern zur zentralen Einheit 37 dient.

In Fig. 4 ist eine bevorzugte Ausführungsform einer adressierbaren Befehlsempfangsschaltung 52 wiedergegeben, wie sie in jeder der Schaltelektronikeinheiten 10 Verwendung finden kann. Da es erforderlich ist, daß jede der vielen Schaltelektronikeinheiten 10 von der zentralen Einheit 37 her individuell angewählt und für eine kurze Zeit in einen aktivierten Zustand versetzt werden kann, in dem sie bestimmte Funktionen durchführt, ist jeder adressierbaren Befehlsempfangsschaltung 52 eine eigene Adresse zugeordnet, die in einem zur Befehlsempfangsschaltung 52 gehörenden Adressenspeicher 65 niedergelegt ist.

Es wird bei diesem Ausführungsbeispiel davon ausgegangen, daß die von der zentralen Einheit 37 zur Anwahl einer bestimmten Schaltelektronikeinheit 10 ausgesandte Adresse die Form von kodierten elektrischen Rechtecksimpulsen aufweist und einer Vielzahl von adressierbaren Befehlsempfangsschaltungen 52 gemeinsam zugeht. Daher besitzt jede Befehlsempfangsschaltung 52 eine Adressen-Erkennungsschaltung 66, die im vorliegenden Fall von einem programmierbaren Rückwärtszähler gebildet wird, dessen Programmiereingänge P₁, P₂, ..., Pₘ mit Hilfe von Drahtbrücken 67 an eine positive Spannung gelegt oder freigelassen werden können. Die Gesamtheit dieser Drahtbrücken 67 und der freigelassenen Programmiereingänge bildet den Adressenspeicher 65.

Durch ein Setzsignal, das dem PE-Eingang des programmierbaren Rückwärtszähler 66 zugeführt wird, wird der durch die Verdrahtung der Programmiereingänge P₁, ..., Pₘ vorgegebene Zahlenwert in den Rückwärtszähler 66 eingeschrieben und vom Rückwärtszähler 66 jeweils um den Zahlenwert "1" verringert, wenn seinem Takteingang T ein Zählimpuls zugeführt wird. Erreicht der Zählwert im programmierbaren Rückwärtszähler 66 auf diese Weise den Zahlenwert "O", so erscheint am bis dahin auf logisch "Null" liegenden "O"-Ausgang des Rückwärtszählers 66 eine logische "Eins", die am Ausgang A₂ zum Schließen des Ein/Aus-Schalters 55 Verwendung findet.

Diese Art der Adressenspeicherung und -erkennung hat zur Folge, daß die Adressen von der zentralen Einheit 37 in Form einer Folge von elektrischen Rechtecksimpulsen einheitlicher Länge ausgesandt werden können, wobei die Kodierung einer bestimmten Adresse durch die Anzahl der in einer solchen Impulsfolge enthaltenen Einzelimpulse gegeben ist. Um also beispielsweise die adressierbare Befehlsempfangsschaltung 52 mit der Adresse "FÜNF" zu aktivieren, muß die zentrale Einheit 37 eine Impulsfolge mit fünf Einzelimpulsen aussenden, wobei dann, wenn keine weiteren Maßnahmen ergriffen werden, der Reihe nach zuerst die adressierbaren Befehlsempfangsschaltungen 52 mit der Adresse "EINS", dann die Befehlsempfangsschaltung 52 mit der Adresse "ZWEI" usw. aktiviert werden.

Beim Empfang des nächsten von der Zentrale kommenden Adressenimpulses zählt der Rückwärtszähler 66 einer bis dahin aktivierten Befehlsempfangsschaltung 52 auf den Zählwert "-1" und das Steuersignal an seinem "O"-Ausgang verschwindet, so daß der Ein/Aus-Schalter 55 wieder geöffnet wird. Die Aktivierung einer bestimmten Befehlsempfangsschaltung 52 und damit der zugehörigen Schaltelektronikeinheit 10 dauert also immer nur so lange, bis von der zentralen Einheit 37 das nächste Adressensignal ausgesandt wird, was im vorliegenden Fall, in dem dieses nächste Adressensignal nur aus einem einzigen Adressenimpuls besteht, bei einem schnell durchgetakteten Gesamtsystem nur ein vergleichsweise kurzer Zeitraum ist.

Nun soll aber, wie bereits geschildert, bei aktivierter Befehlsempfangsschaltung 52 nicht nur immer eine Verbindung zwischen dem zugehörigen Testpunkt 57 und der Datenleitung 17 hergestellt werden, um den Betriebszustand des betreffenden Verbrauchers 3 abzufragen oder um einen Teststrom einzuprägen, sondern es soll auch die Möglichkeit bestehen, im Bedarfsfall den Schaltzustand des Betriebszustandsschalters 45 und damit den Betriebszustand des zugehörigen Verbrauchers 3 zu verändern, was durch das kurzzeitige Anlegen eines Schaltsignals an den vom Ausgang A₁ angesteuerten Ein/Aus-Schalter 50 geschieht.

Dabei soll nach dem oben gesagten der Betriebszustandsschalter 45 nur dann zu einer Änderung seines Schaltzustandes veranlaßt werden, wenn seine zugehörige adressierbare Befehlsempfangsschlaltung 52 aktiviert ist und ihr gleichzeitig von der zentralen Einheit 37 her ein Schaltbefehlssignal zugeführt wird, das hier in Form eines elektrischen Impulses erzeugt wird.

Zu diesem Zweck wird der das Relais 48 steuernde Ein/Aus-Schalter 50 von einem UND-Gatter 68 angesteuert, das immer dann ein impulsförmiges Schaltsignal abgibt, wenn von der zentralen Einheit 37 ein Schaltbefehlssignal ausgesendet wird und gleichzeitig die zugehörige adressierbare Befehlsempfangsschaltung 52 aktiviert ist. Um letzteres zu erkennen, ist der eine Eingang des UND-Gatters 68 mit dem "O"-Ausgang des Rückwärtszählers 66 verbunden, so daß ein an seinem zweiten Eingang erscheinender Impuls nur dann weitergegeben wird, wenn am "O"-Ausgang des Rückwärtszählers 66 das Ausgangssignal in Form einer logischen "Eins" vorhanden ist.

Nimmt man an, daß die zentrale Einheit 37 die Vielzahl von adressierbaren Befehlsempfangsschaltungen 52 ständig der Reihe nach aktiviert, so kann ein Schaltsignal, durch das der Betriebszustandsschalter 45 geöffnet, geschlossen oder umgeschaltet wird, in jedem Aktivierungs-Zyklus einmal erzeugt werden. Je nach Anzahl der mit der zentralen Einheit 37 verbundenen Schaltelektronikeinheiten 10 ist eine solche Änderung des Schaltzustandes eines jeden Betriebszustandsschalters 45 und somit des Betriebszustandes eines jeden Verbrauchers 3 in Abständen einiger Millisekunden bzw. Hundertstel- oder Zehntel-Sekunden möglich; abgesehen von dieser Beschränkung für die Ein- und Ausschaltzeitpunkte kann also jeder Betriebszustandsschalter 45 praktisch zu beliebigen Zeitpunkten geöffnet, geschlossen oder umgeschaltet werden und für beliebig lange Zeiträume geöffnet, geschlossen oder in einem sonstigen Schaltzustand bleiben.

Aus dieser Schilderung der grundsätzlichen Funktion der adressierbaren Befehlsempfangsschaltungen 52 innerhalb eines eine Vielzahl von Schaltelektronikeinheiten 10 mit nachgeordneten Verbrauchern 3 umfassenden Systems ergibt sich, daß jeder dieser Befehlsempfangsschaltungen 52 von der zentralen Einheit 37 wenigstens drei verschiedene Arten von elektrischen Rechtecksimpulsen zugeführt werden, nämlich Adressensignalimpulse bzw. Zählimpulse für den programmierbaren Rückwärtszähler 66, Schaltbefehlssignal-Impulse zum Ein-, Aus- oder Umschalten des Verbrauchers 3 und Setzsignal-Impulse, die dazu dienen, am Anfang eines jeden Anwähl-Zyklus die im Adressenspeicher 65 enthaltene Adresse erneut in den die Adressen-Erkennungsschaltung 66 bildenden Rückwärtszähler einzuschreiben.

Vorzugsweise handelt es sich bei allen genannten Impulsarten um elektrische Rechtecksimpulse, die sich voneinander nur durch ihre zeitliche Länge unterscheiden. Es wird hier angenommen, daß die von der zentralen Einheit 37 ausgesandten Adressenimpulse jeweils eine Länge von 100 µs besitzen, die um maximal ± 10 µs schwanken kann, während die Schaltbefehlssignal-Impulse eine zeitliche Länge von 200 ± 10, µs und die Setzsignal-Impulse eine zeitliche Länge von 300 ± 10 µs besitzen.

Alle diese verschiedenen Impulsarten werden den adressierbaren Befehlsempfangsschaltungen 52 jeweils auf der gemeinsamen als Steuerleitung dienenden Ader 16 über den Eingang E zugeführt, dem, wie Fig. 4 zeigt, zunächst ein die Impulsform regenerierender und invertierender Schmitt-Trigger 70 nachgeschaltet ist. Es wird bei dieser Beschreibung davon ausgegangen, daß die am Eingang E ankommenden Rechtecksimpulse ungestört sind, d.h. insbesondere die für ihre eindeutige Identifizierung erforderliche, korrekte zeitliche Länge und auch die richtigen zeitlichen Abstände voneinander besitzen und daß keine Störimpulse auftreten, die mit den Nutzsignalimpulsen verwechselt werden oder diese so in kürzere Impulse zerhacken könnten, daß die Nutzsignalimpulse nicht mehr als solche erkennbar sind. Als einzige Störung wird hier zugelassen, daß die zeitliche Länge der Impulse innerhalb der oben angegebenen Schwankungsbreite von ± 10 µs variiert. Sollten diese Bedingungen nicht ohne weiteres erfüllbar sein, wie dies z.B. in KFZ-Bordnetzen der Fall ist, so ist es erforderlich, vor jedem Eingang E eine Störschutzschaltung wie z.B. ein digitales Filter vorzusehen, das die Nutzsignalimpulse von den Störimpulsen trennt und erforderlichenfalls zerhackte Nutzsignalimpulse wieder zur vollen Länge regeneriert. Ein solches Filter ist beispielsweise in der deutschen Patentanmeldung P 36 08 440.9 beschrieben.

Eine andere Möglichkeit zur Störungsunterdrückung besteht darin, daß die zentrale Einheit über zwei miteinander verdrillte Steuerleitungen mit jeder der Befehlsempfangsschaltungen verbunden ist, die dann jeweils zwei Eingänge aufweisen, denen ein Differenzverstärker nachgeschaltet ist. Sendet man auf den beiden Steuerleitungen die verschiedenen Signalimpulse gleichzeitig aber mit entgegengesetztem Spannungsvorzeichen aus, so wird der Differenzverstärker diese Nutzsignalimpulse weitergeben, während er Störsignale unterdrückt, die auf den beiden miteinander verdrillten Steuerleitungen gleichzeitig mit demselben Spannungsvorzeichen auftreten. Welche dieser beiden oder anderer, dem Fachmann bekannter Störschutzmaßnahmen vorzugsweise ergriffen wird, kann im Einzelfall insbesondere in Abhängigkeit von Art und Häufigkeit der auftretenden Störsignale ermittelt und festgelegt werden. Es sei hier noch ausdrücklich darauf hingewiesen, daß die verschiedenen Signalarten, die von der zentralen Einheit 37 an die Befehlsempfangsschaltungen 52 übertragen werden, auch auf andere Weise als durch die unterschiedliche zeitliche Länge von Rechtecksimpulsen, beispielsweise durch Impulskode-Modulation voneinander unterschieden werden können.

Die invertierten Ausgangsimpulse des Schmitt-Triggers 70 werden einem als Impulslängendiskriminator 71 ausgebildeten Impulsdiskriminator zugeführt, der drei Ausgangsleitungen 72, 73, 74 besitzt. Auf der Ausgangsleitung 72 gibt der Impulslängendiskriminator immer dann einen Impuls geeigneter Länge ab, wenn er an seinem Impulseingang einen Adressensignal-Impuls, d.h. einen Impuls erhalten hat, dessen zeitliche Länge zwischen 90 µs und 110 µs liegt. Auf der Ausgangsleitung 73 gibt der Impulslängendiskriminator immer dann einen Impuls geeigneter Länge ab, wenn er an seinem Eingang einen Schaltbefehlssignal-Impuls, d.h. einen Impuls erhalten hat, dessen zeitliche Länge zwischen 190 µs und 210 µs liegt. Auf der Ausgangsleitung 74 gibt der Impulslängendiskriminator 71 immer dann einen Ausgangsimpuls geeigneter Länge ab, wenn er an seinem Eingang einen Setzsignalimpuls, d.h. einen Impuls mit einer zeitlichen Länge zwischen 290 µs und 310 µs erhalten hat.

Wie Fig. 4 zeigt, ist die Ausgangsleitung 72 des Impulslängendiskriminators 71 mit dem Zähleingang T des Rückwärtszählers 66 verbunden, so daß die auf der Ausgangsleitung 72 erscheinenden Ausgangsimpulse des Impulslängendiskriminators 71 dem Rückwärtszähler 66 als Zählimpulse zugeführt werden.

Die Ausgangsleitung 73 des Impulslängendiskriminators 71 ist mit dem zweiten Eingang des UND-Gatters 68 verbunden, so daß die hier erscheinenden Impulse als Schaltsignalimpulse zur Ansteuerung des Ein/Aus-Schalters 50 dienen, wenn am "O"-Ausgang des Rückwärtszählers 66 ein Ausgangssignal vorhanden ist.

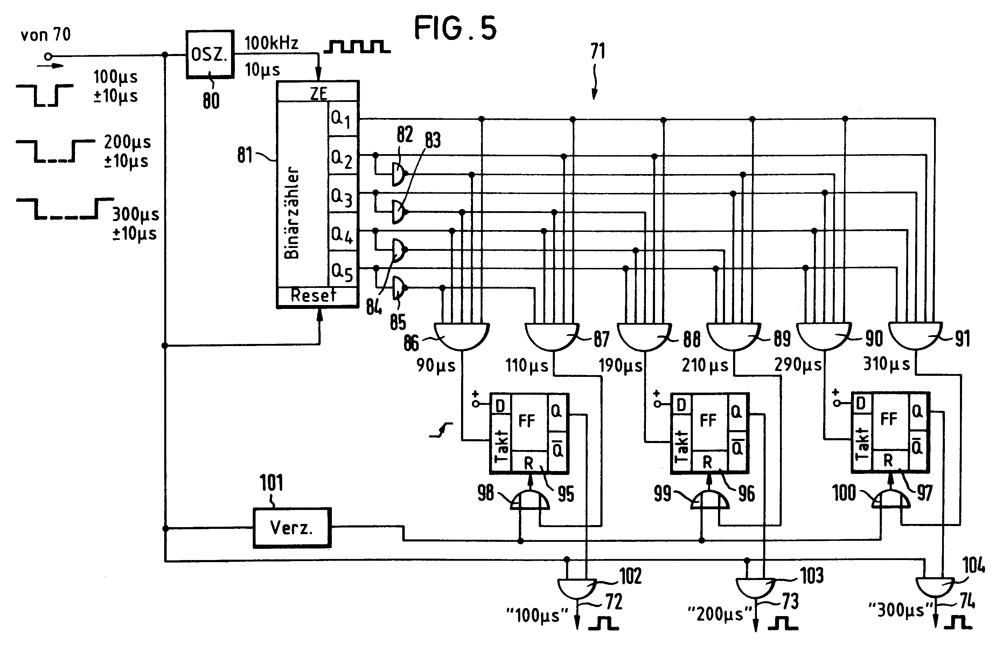

In Fig. 5 ist eine rein digitale Ausführungsform des Impulslängendiskriminators 71 aus Fig. 4 wiedergegeben. Die vom invertierenden Schmitt-Trigger 70 kommenden Eingangsimpulse werden einerseits dem auf logisch "Null" ansprechenden Freigabe-Eingang eines Oszillators 80 zugeführt, der daraufhin beispielsweise mit einer Frequenz von 100 kHz zu schwingen anfängt. Die Ausgangsimpulse dieses Oszillators gelangen an den Zähleingang eines Binärzählers 81, dessen Reset-Eingang ebenfalls mit dem Ausgang des invertierenden Schmitt-Triggers 70 verbunden ist, so daß er beim Erscheinen eines Eingangsimpulses für den Impulslängendiskriminator 71 freigegeben wird.

Den Binärausgängen Q₁ bis Q₅ sind im vorliegenden Fall vier Inverter 82 bis 85 und sechs UND-Gatter 86 bis 91 nachgeschaltet, von denen jedes fünf Eingänge umfaßt, die mit den Binärausgängen Q₁ bis Q₅ bzw. den die Signale der Binärausgänge Q₁ bis Q₅ invertierenden Invertern 82 bis 85 so verbunden sind, daß das UND-Gatter 86 den Zahlenwert NEUN, das UND-Gatter 87 den Zahlenwert ELF, das UND-Gatter 88 den Zahlenwert NEUNZEHN, das UND-Gatter 89 den Zahlenwert EINUNDZWANZIG, das UND-Gatter 90 den Zahlenwert NEUNUNDZWANZIG und das UND-Gatter 91 den Zahlenwert EINUNDDREISSIG abfragt. Am Ausgang der UND-Gatter 86 bis 91 erscheint also jeweils dann ein positiver Spannungsimpuls, wenn der Binärzähler 81 für einen Zeitraum gezählt hat, der 90 µs lang, 110 µs lang, 190, µs lang, 210 µs lang bzw. 310 µs lang ist.

Weiterhin umfaßt der Impulslängendiskriminator 71 drei D-Flip-Flops 95, 96 und 97, wobei der Takteingang des D-Flip-Flops 95 mit dem Ausgang des UND-Gatters 86, der Takteingang des D-Flip-Flops 96 mit dem Ausgang des UND-Gatters 88 und der Takteingang des D-Flip-Flops 97 mit dem Ausgang des UND-Gatters 90 verbunden ist. Die D-Eingänge der Flip-Flops 95 bis 97 sind jeweils auf eine positive Spannung gelegt.

Jedem der D-Flip-Flops 95 bis 97 ist ein ODER-Gatter 98, 99 bzw. 100 zugeordnet, wobei der Ausgang des betreffenden ODER-Gatters jeweils den Rücksetzeingang des zugehörigen Flip-Flops ansteuert. Der eine Eingang des ODER-Gatters 98 ist mit dem Ausgang des UND-Gatters 87 verbunden, während der eine Eingang des ODER-Gatters 99 mit dem Ausgang des UND-Gatters 89 und der eine Eingang des ODER-Gatters 100 mit dem Ausgang des UND-Gatters 91 verbunden ist. Der jeweils zweite Eingang der ODER-Gatter 98, 99 und 100 ist mit dem Ausgang eines Verzögerungsgliedes 101 verbunden, dessen Eingang ebenfalls die vom invertierenden Schmitt-Trigger 70 abgegebenen Impulse zugeführt werden. Jeder der Q-Ausgänge der D-Flip-Flops 95, 96 und 97 steuert den einen Eingang eines zugehörigen UND-Gatters 102, 103 bzw. 104 an, deren jeweils zweite Eingänge die vom invertierenden Schmitt-Trigger 70 abgegebenen Eingangs-Impulse des Impulslängendiskriminators unmittelbar erhalten.

Der Ausgang des UND-Gatters 102 ist mit der auch in Fig. 4 dargestellten Leitung 72 verbunden, während der Ausgang des UND-Gatters 103 die Leitung 73 und der Ausgang des UND-Gatters 104 die Leitung 74 mit Signalimpulsen versorgt.

Erscheint am Eingang des Impulslängendiskriminators ein negativer Eingangsimpuls, so werden nicht nur der Oszillator 80 zum Schwingen und der Binärzähler 81 zum Abzählen der Oszillatorimpulse freigegeben, sondern es werden gleichzeitig auch die UND-Gatter 102, 103 und 104 gesperrt. Sind nach Erscheinen der Vorderflanke des Eingangsimpulses 90, µs vergangen, so erscheint am Ausgang des UND-Gatters 86 eine logische "Eins" und die dabei auftretende steigende Flanke setzt das D-Flip-Flop 85, so daß an dessen Q-Ausgang eine logische "Eins" erscheint. Solange jedoch am Eingang des Impulslängendiskriminators 71 ein negativer Eingangsimpuls anliegt, bleibt das UND-Gatter 102 gesperrt, so daß sich die auf der Leitung 72 vorhandene logische "Null" nicht ändert. Dauert der Eingangsimpuls länger als 110 µs, so erscheint zu diesem Zeitpunkt eine logische "Eins" am Ausgang des UND-Gatters 87, die über das ODER-Gatter 98 das D-Flip-Flop 95 zurücksetzt, so daß die nunmehr am Q-Ausgang dieses Flip-Flops wieder erscheinende logische "Null" das UND-Gatter 102 weiterhin sperrt, ohne daß an seinem Ausgang, d.h. auf der Leitung 72 irgendeine Änderung eingetreten ist.

Entsprechendes geschieht nach 190 µs und 210 µs an den Ausgängen der UND-Gatter 88 und 89, des D-Flip-Flops 96, des ODER-Gatters 99 und des UND-Gatters 103 bzw. nach 290 µs und 310 µs an den Ausgängen der UND-Gatter 90, 91, des D-Flip-Flops 97, des ODER-Gatters 100 und des UND-Gatters 104.

Handelt es sich jedoch bei dem Eingangimpuls um einen Adressenimpuls von beispielsweise 105 µs Länge, so wird zwar das D-Flip-Flop 95 nach 90 µs durch das UND-Gatter 86 gesetzt, das Gatter 87 kann aber keine logische "Eins" mehr erzeugen, da durch die am Impulsende auftretende logische "Eins" der Oszillator 80 angehalten und der Binärzähler 81 zurückgesetzt wird. Da zu diesem Zeitpunkt am Q-Ausgang des gesetzten D-Flip-Flops 95 eine logische "Eins" vorhanden ist, wird an beide Eingänge des UND-Gatters 102 solange eine logische "Eins" angelegt, und als Ausgangssignal des UND-Gatters 102 auf die Leitung 72 gegeben, bis das Verzögerungsglied 101 die bei Ende des Eingangsimpulses auftretende logische "Eins" an seinen Ausgang weitergegeben und damit über das ODER-Gatter 98 das D-Flip-Flop 95 zurückgesetzt hat. Dann geht der Q-Ausgang dieses Flip-Flops wieder auf logisch "Null" und das UND-Gatter 102 wird wieder gesperrt.

Aufgrund der Tatsache, daß innerhalb des Zeitfensters von 90 µs bis 100 µs das Ende des Eingangsimpulses aufgetreten ist, hat daher das UND-Gatter 102 einen Impuls auf die Leitung 72 gegeben, dessen zeitliche Länge durch die Verzögerungszeit des Verzögerungsgliedes 101 bestimmt ist. In entsprechender Weise erscheinen derartige Impulse auf den Leitungen 73 bzw. 74, wenn das Ende des Eingangsimpulses des Impulslängendiskriminators 71 in das Zeitfenster zwischen 190 µs und 210 µs bzw. in das Zeitfenster 290 µs bis 310 µs fällt.

Als Alternative zu dem eben beschriebenen rein digital arbeitenden Ausführungsbeispiel eines Impulslängendiskriminators kann auch ein Impulslängendiskriminator verwendet werden, der die Lage und die Länge der verschiedenen Zeitfenster mit Hilfe von analog arbeitenden RC-Gliedern festlegt, wie er beispielsweise in der deutschen Patentanmeldung P 36 23 705 beschrieben ist.

Anhand von Fig. 6 soll nun eine bevorzugte Ausführungsform für die Strombegrenzungs- und Pufferschaltungen 39 bzw. 39' erläutert werden, wie sie gemäß den Fig. 1 bis 3 zur Strom- bzw. Spannungsversorgung der zentralen Einheit 37, der Befehlstasten 8, der Relais 48 und der adressierbaren Befehlsempfangsschaltungen 52 verwendet werden. Jede dieser Strombegrenzungs- und Pufferschaltungen 39, 39' besitzt zwei gleich aufgebaute Zweige, die zur Erhöhung der Zuverlässigkeit zueinander parallel angeordnet und voneinander getrennt über jeweils eine eigene Leitung 41, 42 mit der Spannungsversorgung verbunden sind. Jeder der beiden Zweige umfaßt eine Strombegrenzungsdiode 110, einen Strombebrenzungswiderstand 111 und einen Pufferkondensator 112, die in dieser Reihenfolge seriell zwischen die Spannungsversorgungsleitungen 41 bzw. 42 und die Masseleitung 43 geschaltet sind. Zwischen dem Strombegrenzungswiderstand 111 und dem Pufferkondensator 112 eines jeden Zweiges kann die Versorgungsspannung U_{V} für die jeweils nachgeordnete Schaltung abgegriffen werden. Um von den beiden parallelen Zweigen eine gemeinsame Spannung U_{V} abgreifen zu können, sind die beiden Abgriffspunkte für die Versorgungsspannung durch zwei gegeneinander geschaltete Dioden 115 entkoppelt, die mit ihren Kathodenanschlüssen miteinander verbunden sind. Vom Verbindungspunkt dieser beiden Entkopplungsdioden 115 wird dann die Versorgungsspannung U_{V} der jeweils nachgeordneten Schaltungseinheit zugeführt.

Sinn dieser Strombegrenzungs- und Pufferschaltungen 39, 39' ist es, eine möglichst hohe Zuverlässigkeit für die gesamte Schaltungsanordnung zu gewährleisten. Insbesondere soll durch einen Defekt, der in einem der verschiedenen, jeweils durch eine eigene Strombegrenzungs- und Pufferschaltung 39, 39' versorgten Teile der Schaltungsanordnung auftritt, nur der betroffene Teil nicht aber die übrige Schaltungsanordnung in der Funktion beeinträchtigt werden.

Besonders kritisch ist in dieser Hinsicht das Durchlegieren von Bauelementen, das den normalerweise hohen Eingangswiderstand eines Einganges praktisch auf Null reduziert, so daß in diesen Eingang ein sehr hoher Strom fließen kann.

Dies wird bei der beschriebenen Ausführungsform einer Strombegrenzungs- und Pufferschaltung 39, 39' zumindest für die Stromversorgungseingänge, an denen die Versorgungsspannung U_{V} liegt, primär durch die Strombegrenzungsdioden 110 verhindert, die z.B. bei Verwendung für die Spannungsversorgung einer adressierbaren Befehlsempfangsschaltung 52 den durch sie hindurchfließenden Strom auf einen Wert von 400 µA begrenzen, der etwas größer ist als der Strom, den die Befehlsempfangsschaltung 52 maximal benötigt. Im Prinzip würde in jedem der beiden Zweige eine solche Strombegrenzungsdiode genügen, doch wird zur Erhöhung der Zuverlässigkeit mit dieser Diode ein zweites, gleich wirkendes Bauelement in Reihe geschaltet. Da die Kosten für Strombegrenzungsdioden vergleichsweise groß sind, wird als zweites Bauelement vorzugsweise ein Strombegrenzungswiderstand 111 gewählt, dessen Grenzstrom in Abhängigkeit von der Versorgungsspannung allerdings wesentlich größer als der Grenzstrom der Dioden 110 sein kann. Ein bevorzugter Wert für den Strombegrenzungswiderstand 111 ist beispielsweise 10 kΩ. Bei der Verwendung von C-MOS-Bausteinen, die im Ruhezustand eine außerordentlich niedrige Stromaufnahme haben, beim Umschalten von einem Logikpegel in den anderen aber kurzfristig einen im Vergleich hierzu wesentlich höheren Strom ziehen, würde dies ohne weitere Maßnahmen bedeuten, daß die Versorgungsspannung bei jedem Schaltvorgang zusammenbrechen würde. Um dies zu verhindern, sind die Pufferkondensatoren 112 vorgesehen, die für die kurzen Schaltzeiten den benötigten Strom liefern und sich dann über den zugehörigen Strombegrenzungswiderstand 111 wieder aufladen. Dabei bewirkt die Strombegrenzungsdiode 110, daß nicht die gesamte Spannung am Strombegrenzungswiderstand 111 abfällt und somit ein wesentlich niedrigerer Strom fließt. Daher erfolgt das Wiederaufladen der Pufferkondensatoren 112 über einen Zeitraum hinweg, der wesentlich länger als der für den Schaltvorgang benötigte Zeitraum ist. Der Strombedarf, der bei C-MOS-Bausteinen für die kurzen Schaltzeiten sehr hoch und für die dazwischen liegenden Ruhezeiten außerordentlich niedrig ist, wird also durch diese Schaltung in einen in etwa gleichförmigen mittleren Strombedarf übergeführt.

Nachdem nunmehr der Aufbau verschiedener Ausführungsformen einer erfindungsgemäßen Schaltungsanordnung in den wesentlichen Teilen beschrieben wurde, soll im folgenden die Funktionsweise dieser beispielhaften Varianten nochmals im Zusammenhang für ein KFZ-Bordnetz erläutert werden.

Dabei wird davon ausgegangen, daß die zentrale Einheit 37 ständig, d.h. auch dann eingeschaltet ist, wenn der Zündschlüssel 21 abgezogen ist. Dies ermöglicht es, auch ohne eingeschaltete Zündung bestimmte Verbraucher 3 ein-, aus- oder umzuschalten, während andere Verbraucher 3 nur ein- oder umgeschaltet werden können,wenn die durch den Zündschlüssel 21 betätigbaren Schalter 20 (Fig. 1) geschlossen sind.

Im normalen Betrieb durchläuft die zentrale Einheit 37 ständig Abfrage- oder Aktivierungszyklen, während derer die Befehlsempfangsschaltungen 52 der verschiedenen Schaltelektronikeinheiten 10 ständig in einer durch ihre Adressen vorgegebenen Reihenfolge einzeln aktiviert und dann wieder desaktiviert werden.

Zu Beginn eines jeden Aktivierungszyklus sendet die zentrale Einheit 37 zunächst einen durch seine zeitliche Länge von 300 µs gekennzeichneten Setzbefehlsimpuls aus, der an alle adressierbaren Befehlsempfangsschaltungen 52 gelangt, von den Impulslängendiskriminatoren 71 erkannt und in einen auf der jeweiligen Leitung 74 (Fig. 4) erscheinenden Setzimpuls umgeformt wird, mit dessen Hilfe der zugehörige Rückwärtszähler 66 auf den durch seinen Adressenspeicher 65 vorgegebenen Zahlenwert gesetzt wird. Da dies in allen Schaltelektronikeinheiten 10 gleichzeitig geschieht, werden durch den einen Setzbefehlsimpuls alle Befehlsempfangsschaltungen 52 in ihren Ausgangszustand gebracht.

Danach beginnt die zentrale Einheit 37 durch Aussenden einzelner, jeweils durch ihre zeitliche Länge von 100 µs gekennzeichneter Adressen-Signalimpulse die Befehlsempfangsschaltungen 52 und damit die Schaltelektronikeinheiten 10 der Reihe nach einzeln zu aktivieren. Auch jeder der Adressen-Signalimpulse gelangt praktisch gleichzeitig an alle Befehlsempfangsschaltungen 52 und wird von den dortigen Impulslängendiskriminatoren 71 erkannt und in einen Zählimpuls für den zugehörigen Rückwärtszähler 66 umgesetzt. Bei jedem Adressen-Signalimpuls zählen also alle Rückwärtszähler 66 um den Zahlenwert "1" abwärts. Das bedeutet, daß beim ersten Adressen-Signalimpuls diejenige Befehlsempfangsschaltung 52 aktiviert wird (wobei am "O"-Ausgang des betreffenden Rückwärtszählers 66 eine logische "Eins" erscheint), in deren Adressenspeicher 65 die Adresse "EINS" eingespeichert ist. Durch den zweiten Adressenimpuls wird diese Befehlsempfangsschaltung 52 desaktiviert, da ihr Rückwärtszähler auf "-1" zählt, und es wird die Befehlsempfangsschaltung 52 mit der Adresse "ZWEI" aktiviert usw. Die zentrale Einheit 37 sendet also zum Durchlaufen eines Aktivierungszyklusses eine der größten vorhandenen Adresse entsprechende Anzahl von Adressensignalimpulsen aus, im günstigsten Fall also so viele Adressensignalimpulse wie Schaltelektronikeinheiten 10 vorhanden sind. Ist ein Aktivierungszyklus beendet, wird ein neuer Setzbefehlsimpuls ausgesandt und es beginnt der nächste Zyklus.

Während des Zeitraumes, in dem eine Befehlsempfangsschaltung 52 und damit die zugehörige Schaltelektronikeinheit 10 aktiviert ist, erscheint am Ausgang A₂ der Befehlsempfangsschaltung 52 eine logische "Eins", durch die der zugehörige Ein/Aus-Schalter 55 (Fig. 2 und 3) geschlossen wird. Damit wird die am Testpunkt 57 der betreffenden Schaltelektronikeinheit 10 vorhandene Spannung über die Ader 17 an die zentrale Einheit 37 übertragen, die somit den Betriebszustand des betreffenden Verbrauchers 3 abfragt. Stimmt dieser Betriebszustand mit der durch die zugehörige Befehlstaste 8 gegebenen Befehlsvorgabe überein, so sendet die zentrale Einheit 37 den nächsten Adressenimpuls aus, um den nächsten Verbraucher 3 (oder die nächste Meßstelle) abzufragen.

Stimmt der Betriebszustand eines abgefragten Verbrauchers 3 nicht mit der Befehlsvorgabe überein, weil diese z.B. seit dem letzten Abfragezyklus geändert worden ist, läßt die zentrale Einheit die betreffende Befehlsempfangsschaltung 52 aktiviert und sendet einen Schaltbefehls-Impuls mit 200 µs Länge aus, der zwar an alle Befehlsempfangsschaltungen 52 gelangt und von allen Impulslängendiskriminatoren 71 dekodiert und in einen Schaltsignalimpuls auf der jeweiligen Leitung 73 (Fig. 4 und 5) umgesetzt wird, aber nur am Ausgang A₁ desjenigen logische "Eins" erhält, weil der zugehörige Rückwärtszähler 66 auf "NULL" gezählt hat. Somit wird der Schaltbefehlssignalimpuls der zentralen Einheit 37 nur in der Schaltelektronikeinheit 10 wirksam, die zu diesem Zeitpunkt gerade angewählt ist. Auf diese Weise kann also jeder Verbraucher 3 individuell ein-, aus- oder umgeschaltet werden.

Soweit es den bisher geschilderten "normalen" Betriebsablauf anbelangt, arbeiten erfindungsgemäße Schaltungsanordnungen 1, deren Schaltelektronikeinheiten 10 entweder gemäß Fig. 2 oder gemäß Fig. 3 aufgebaut sind, in völlig identischer Weise. Dies gilt auch für den ersten Teil des Betriebsfalles "Auftreten eines Kurzschlusses oder eines sonstigen Defektes an einem der Verbraucher", den die zentrale Einheit 37 aus den mit einem solchen Defekt verbundenen Änderungen des Ausgangssignals des betroffenen Sensors 26 erkennt. Die zentrale Einheit 37 öffnet dann bei beiden Varianten den zugehörigen schnellen Schutzschalter 28 und schließt ihn nach kurzer Zeit wieder, um festzustellen, ob es sich z.B. um einen von selbst wieder verschwindenden "Kurzschluß-Wischer" gehandelt hat. Ist dies der Fall, wird der gerade laufende Aktivierungs- und Abfragezyklus in unveränderter Form fortgesetzt.

Ist jedoch ein Dauerdefekt vorhanden, was die zentrale Einheit 37 wiederum aus dem Signal des Sensors 26 erkennt, so wird der schnelle Schutzschalter sofort wieder geöffnet und die zentrale Einheit 37 sucht den defekten Verbraucher 3, um den zugehörigen Betriebszustandsschalter 45 in die "AUS"-Stellung zu schalten und dort solange zu halten, bis ihr durch ein von außen einzugebendes Freigabesignal angezeigt wird, daß der Defekt beseitigt worden ist. Der Suchvorgang nach dem defekten Verbraucher 3 läuft bei den beiden in den Fig. 2 und 3 gezeigten Varianten auf unterschiedliche Weise, wie im folgenden erläutert wird.

Sind die Schaltelektronikeinheiten 10 gemäß Fig. 2 aufgebaut, d.h. ist zwischen dem Testpunkt 57 und der Anschlußstelle der Verbraucher-Spannungs-Anschlußleitung 47 an die Ader 13 der Ringleitung 5 eine Entkopplungsdiode 62 vorgesehen, so setzt die zentrale Einheit 37 nach dem zweiten Öffnen des schnellen Schutzschalters 28 den gerade laufenden Aktivierungs- und Abfragezyklus fort, ohne am Schaltzustand der Betriebszustandsschalter 45 etwas zu ändern. Da der schnelle Schutzschalter 28 geöffnet ist, sind alle Testpunkte 57 spannungslos. Immer dann, wenn im Laufe des Aktivierungs- und Abfragezyklusses die Schaltelektronikeinheit 10 eines beim Auftreten des Defektes eingeschalteten Verbrauchers 3 aktiviert ist, unterbricht die zentrale Einheit 37 die Aussendung von Adressensignalimpulsen und prägt, während die Schaltelektronikeinheit 10 aktiviert bleibt, in die Datenleitung einen negativen Teststrom ein, der über den geschlossenen Ein/Aus-Schalter 55 (Fig. 2) der aktivierten Schaltelektronikeinheit 10 durch den Widerstand 59 und die Diode 58 zum Testpunkt 57 und von dort durch den Verbraucher 3 zur Verbrauchermasse M fließt. An der Höhe der Spannung, die zum Einprägen dieses Teststroms erforderlich ist, erkennt die zentrale Einheit 37, ob an dem jeweils angewählten Verbraucher 3 ein Defekt wie z.B. ein Kurzschluß vorliegt oder nicht. Stellt die zentrale Einheit 37 fest, daß an dem gerade untersuchten Verbraucher kein Defekt vorhanden ist, wird die nächste Schaltelektronikeinheit 10 aktiviert usw. Ist der defekte Verbraucher 3 gefunden, wozu es unter Umständen erforderlich sein kann, einen neuen Abfragezyklus zu beginnen, so sendet die zentrale Einheit sofort, d.h. während die zugehörige Schaltelektronikeinheit aktiviert ist, einen Schaltbefehlsimpuls aus, der in der oben beschriebenen Weise verarbeitet wird und dazu dient, den Betriebszustandsschalter 45 des defekten Verbrauchers 3 zu öffnen. Da zu diesem Zeitpunkt der schnelle Schutzschalter 28 geöffnet ist, erfolgt die Trennung der mechanischen Kontakte des Betriebszustandsschalters 45 im strom- und spannungslosen Zustand, so daß trotz eines eventuell vorhandenen Kurzschlusses mit keinerlei Funkenbildung und verstärkter Abnutzung der mechanischen Schaltkontakte zu rechnen ist. Handelt es sich bei dem Betriebszustandsschalter 45 des defekten Verbrauchers 3 um einen Umschalter mit mehreren Schaltzuständen, kann es erforderlich sein, daß die zentrale Einheit 37 mehrere Schaltbefehlsimpulse aussendet, um den defekten Verbraucher 3 von der Spannungsversorgungsleitung (Ader 13) zu trennen. Ist dies geschehen, wird sofort der schnelle Schutzschalter 28 wieder geschlossen, wodurch die einwandfreien Verbraucher 3 wieder mit elektrischer Energie versorgt werden. Die zentrale Einheit 37 speichert die Adresse des defekten Verbrauchers 3 und verhindert ein Wiedereinschalten solange, bis der Defekt beseitigt ist.

Bei dem Ausführungsbeispiel nach Fig. 3 setzt die zentrale Einheit 37 ebenfalls nach dem zweiten Öffnen des schnellen Schutzschalters 28 den gerade laufenden Aktivierungs- und Abfragezyklus fort, erzeugt aber immer dann, wenn sie die Schaltelektronikeinheit 10 eines bisher eingeschalteten Verbrauchers 3 aktiviert hat, zunächst einen (oder mehrere) Schaltbefehlsimpuls(e), um den zugehörigen Betriebszustandsschalter 45 zu öffnen. Erst dann kann durch Einprägen eines Teststroms, das wie oben beschrieben erfolgt, festgestellt werden, ob ein Defekt vorliegt oder nicht. Ist der Verbraucher 3 in Ordnung, wird ein weiterer (oder mehrere) Schaltbefehlsimpuls(e) erzeugt, um den Betriebszustandsschalter 45 wieder in den zuvor bestehenden Schaltzustand zu bringen. Dann wird die betreffende Schaltelektronikeinheit 10 durch Aussenden eines neuen Adressenimpulses desaktiviert und das beschriebene Verfahren gegebenenfalls in den nächsten Aktivierungszyklus hinein solange fortgesetzt, bis der defekte Verbraucher 3 gefunden ist. Hier bleibt der Betriebszustandsschalter 45 geöffnet und die zentrale Einheit 37 kehrt, wie oben beschrieben, zum Normalbetrieb zurück.

Der Vorteil dieser zweiten Variante besteht darin, daß bei ihr keine in den Spannungs-Anschlußleitungen 47 der Verbraucher 3 liegenden Dioden 62 benötigt werden, an denen jeweils im Normalbetrieb bei eingeschaltetem Verbraucher 3 ein Spannungsabfall von bis zu 0,8 V auftreten kann, was bei Bordnetzen mit geringer Versorgungsspannung V+ unter Umständen nachteilig ist. Demgegenüber hat die erste Variante den Vorteil, daß der defekte Verbraucher 3 mit maximaler Geschwindigkeit gesucht werden kann, da es nicht erforderlich ist, vor und nach dem Einprägen des Teststromes irgendwelche Schaltvorgänge mit vergleichsweise langsamen mechanischen Schaltkontakten durchzuführen. Nur bei dem tatsächlich defekten Verbraucher 3 muß der Betriebszustandsschalter 45 geöffnet werden. Hier ist also die Suchzeit, während derer der schnelle Schutzschalter 28 geöffnet und somit die Energiezufuhr zu allen Verbrauchern zumindest der betroffenen Gruppe unterbrochen ist, besonders kurz. Diese erste Variante wird also mit Vorteil dort verwendet, wo in einem Aktivierungs- und Abfragezyklus sehr viele Verbraucher 3 abgefragt werden müssen.

Bei einer Schaltungsanordnung 1, bei der die Schaltelektronikeinheiten 10 gemäß Fig. 3 aufgebaut sind, ist eine weitere Form der Defektsuche möglich, die einen minimalen Zeitaufwand erfordert. Bei dieser Betriebsvariante wird nach dem zweiten Öffnen des schnellen Schutzschalters 28 von der zentralen Einheit 37 ein General-Ausschaltsignal ausgesandt, das unabhängig davon, ob eine Schaltelektronikeinheit 10 gerade aktiviert ist oder nicht, alle bisher geschlossenen Betriebszustandsschalter 45 öffnet. In jeder Befehlsempfangsschaltung 52 ist hier eine Speicherschaltung vorgesehen, die "sich merkt", daß der zugehörige Betriebszustandsschalter 45 geschlossen war und nur aufgrund des General-Ausschaltsignals geöffnet wurde. Dann setzt die zentrale Einheit 37 den laufenden Aktivierungs- und Abfragezyklus fort und prägt bei jedem Verbraucher 3, dessen Betriebszustandsschalter 45 beim Auftreten des Defektes geschlossen war, einen Teststrom ein, wie es oben bei der Variante gemäß Fig. 2 beschrieben wurde. Ist der defekte Verbraucher 3 gefunden, so sendet die zentrale Einheit 37 ein General-Einschaltsignal aus, das alle Betriebszustandsschalter 45, die beim Auftreten des Defektes geschlossen waren, unabhängig davon schließt, ob die betreffende Schaltelektronikeinheit 10 gerade aktiviert ist oder nicht. Um zuvor nicht eingeschaltete Verbraucher 3 nicht einzuschalten, wird das General-Einschaltsignal nur für solche Betriebszustandsschalter 45 wirksam, bei denen die oben erwähnte Speicherschaltung eine entsprechende Information enthält. Bei dem defekten Verbraucher wird das General-Einschaltsignal entweder dadurch unterdrückt, daß die betreffende Schaltelektronikeinheit 10 aktiviert ist oder es wird durch einen Schaltbefehlsimpuls wieder aufgehoben, den die zentrale Einheit 37 aussendet, solange diese Schaltelektronikeinheit 10 noch aktiviert ist. Es ist klar, daß für dieses Funktionsbeispiel die Befehlsempfangsschaltungen 52 gegenüber dem in Fig. 4 dargestellten Beispiel erweitert werden müssen. So muß die erwähnte Speicherschaltung hinzugefügt werden, und es muß für den Fall, daß die General-Schaltsignale in Form von Impulsen erzeugt werden, die sich hinsichtlich ihrer zeitlichen Länge von den übrigen Impulsen unterscheiden, der Impulslängendiskriminator 71 so erweitert werden, daß er die General-Schaltimpulse unterscheiden und ihrer speziellen Funktion zuführen kann. Eine andere Möglichkeit besteht darin, die General-Schaltsignale als spezielle, ansonsten nicht auftretende Kombination von mehreren Impulsen der anderen Impulsarten zu kodieren. In diesem Fall muß jede der Befehlsempfangsschaltungen 52 eine entsprechende Dekodierschaltung aufweisen, die die General-Schaltsignale erkennt und entsprechend weiterverarbeitet.

Bei der bereits weiter oben angedeuteten Alternative, daß in jeder der Schaltelektronikeinheiten 10 mehr Schaltungs-"Intelligenz" vorgesehen ist, als bei den in den Figuren dargestellten Ausführungsbeispielen, kann jede Schaltelektronikeinheit 10 selbst erkennen, daß der schnelle Schutzschalter 28 öffnet und daß dies aufgrund eines Defektes an ihrem zugehörigen Verbraucher 3 geschieht. In diesem Fall wartet die Schaltelektronikeinheit 10 zunächst ab, ob der schnelle Schutzschalter 28 nach dem ersten Öffnen und Wiederschließen schnell ein zweites Mal öffnet. Ist dies der Fall, so öffnet die Schaltelektronikeinheit 10, die einen Defekt an ihrem Verbraucher 3 erkannt hat, den zugehörigen Betriebszustandsschalter 45 im strom- und spannungsfreien Zustand. Da hierfür nur eine sehr kurze Zeitspanne erforderlich ist, kann der schnelle Schutzschalter 28 nach Verstreichen einer vorgegebenen Sicherheits-Zeitspanne automatisch wieder geschlossen und damit die Energieversorgung der einwandfreien Verbraucher fortgesetzt werden.

## Patentansprüche

1. Schaltungsanordnung (1) zur Stromversorgung einer Vielzahl von Verbrauchern (3) aus einer gemeinsamen elektrischen Energiequelle in einem Bordnetz, insbesondere eines Kraftfahrzeuges, wobei die Schaltungsanordnung (1) folgende Bestandteile aufweist:
- für jeden der Verbraucher (3) eine Verbraucher-Anschlußleitung (47), in der ein zur Betätigung des Verbrauchers (3) dienender, steuerbarer Betriebszustandsschalter (45) liegt, mit dessen Hilfe der Verbraucher (3) von einer Energiezufuhr aus der elektrischen Energiequelle abtrennbar ist,
- eine Haupt-Anschlußleitung (12, 13), die die Verbindung zwischen den Verbraucher-Anschlußleitungen (47) und der elektrischen Energiequelle herstellt, und
- eine Sicherungseinrichtung, die für jeden Verbraucher (3) eine Abfrageschaltung (55, 58, 59) umfaßt, mit der das Vorhandensein einer elektrischen Störung im Bereich des Verbrauchers (3) feststellbar ist,
dadurch **gekennzeichnet**, daß die Sicherungseinrichtung einen steuerbaren schnellen Schutzschalter (28) umfaßt, der in der Haupt-Anschlußleitung (23, 5; 24, 5) mit den Verbrauchern (3) in Reihe liegt und beim Auftreten einer von der Nennspannung stark abweichenden Spannung und/oder eines zu großen Stroms kurzfristig automatisch geöffnet, nach kurzer Zeit wieder geschlossen und beim Vorliegen einer längerdauernden Störung wieder geöffnet wird, damit mit Hilfe der Abfrageschaltungen (55, 58, 59) überprüft werden kann, bei welchem Verbraucher (3) die Störung vorliegt, um den Betriebszustandsschalter (45) des defekten Verbrauchers (3) im strom- und spannungslosen Zustand zu öffnen, und dann den schnellen Schutzschalter (28) automatisch wieder zu schließen.

2. Schaltungsanordnung nach Anspruch 1, dadurch **gekennzeichnet,** daß die Sicherungseinrichtung einen Sensor (26) umfaßt, der den durch die Haupt-Anschlußleitung (23, 5; 24, 5) fließenden Strom und/oder die anliegende Spannung überwacht und dessen Ausgangssignal zur Steuerung des schnellen Schutzschalters (28) Verwendung findet.

3. Schaltungsanordnung nach Anspruch 1 oder 2, dadurch **gekennzeichnet,** daß eine zentrale Einheit (37) vorgesehen ist, die die Betätigung des schnellen Schutzschalters (28) überwacht.

4. Schaltungsanordnung nach Anspruch 3, dadurch **gekennzeichnet,** daß die zentrale Einheit (37) das vom Sensor (26) gelieferte Signal auswertet und den schnellen Schutzschalter (28) in Abhängigkeit von dem vom Sensor (26) abgegebenen Signal steuert.

5. Schaltungsanordnung nach einem der vorhergehenden Ansprüche, dadurch **gekennzeichnet,** daß die Abfrageschaltungen (55, 58, 59) zur Überprüfung des momentanen Betriebszustandes des jeweiligen Verbrauchers (3) ausgebildet sind.

6. Schaltungsanordnung nach einem der vorhergehenden Ansprüche, dadurch **gekennzeichnet,** daß die Betriebszustandsschalter (45) durch Steuersignale in mehr als zwei verschiedene Schaltzustände bringbar sind, die entsprechend viele verschiedene Betriebszustände des zugehörigen Verbrauchers (3) bewirken.

7. Schaltungsanordnung nach Anspruch 6, dadurch **gekennzeichnet,** daß die Steuersignale für die Betriebszustandsschalter (45) in Abhängigkeit vom Schaltzustand des schnellen Schutzschalters (28) und/oder den Informationssignalen der jeweils zugehörigen Abfrageschaltung (55, 58, 59) erzeugt werden.

8. Schaltungsanordnung nach einem der Ansprüche 3 bis 7, dadurch **gekennzeichnet,** daß jedem der Verbraucher (3) eine seinen Betriebszustand steuernde und/oder überwachende Schaltelektronikeinheit (10) zugeordnet ist, und daß die Schaltelektronikeinheiten (10) mit der zentralen Einheit (37) verbunden sind, mit der sie zur Steuerung und/oder Überwachung der gesamten Schaltungsanordnung dienende Signale austauschen.

9. Schaltungsanordnung nach Anspruch 8, dadurch **gekennzeichnet,** daß jedem Verbraucher (3) eine Befehlstaste (8) zugeordnet ist, durch deren Betätigung der jeweils gewünschte Betriebszustand des Verbrauchers (3) vorgebbar ist.

10. Schaltungsanordnung nach Anspruch 9, dadurch **gekennzeichnet,** daß die von den Befehlstasten (8) abgegebenen Signale zur Kennzeichnung der jeweils gewünschten Betriebszustände der zentralen Einheit (37) zugeführt werden, die nach deren Maßgabe an die Schaltelektronikeinheiten (10) Schaltbefehlssignale aussendet, die diese veranlassen, den zugehörigen Verbraucher (3) in den jeweils gewünschten Betriebszustand zu bringen.

## Claims

1. A circuit arrangement (1) for the supply of power to a plurality of loads (3) from a common electrical power source in an on-board power system, in particular of a motor vehicle, wherein the circuit arrangement (1) has the following components:
- for each of the loads (3) a load connecting line (47) in which there is disposed a controllable operating condition switch (45) which serves for actuation of the load (3) and by means of which the load (3) can be separated from a supply of power from the electrical power source,
- a main connecting line (12, 13) which provides the connection between the load connecting lines (47) and the electrical power source, and
- a safety means which includes for each load (3) an interrogation circuit (55, 58, 59) with which the presence of an electrical fault in the region of the load (3) can be detected,
characterised in that the safety means includes a controllable quick-operation circuit breaker (28) which is disposed in the main connecting line (23, 5; 24, 5) in series with the loads (3) and which, upon the occurrence of a voltage which differs greatly from the nominal voltage and/or an excessively high current, is briefly automatically opened, closed again after a short time and opened again if there is a long-term fault, so that it is possible by means of the interrogation circuits (55, 58, 59) to check at which load (3) the fault is occurring, in order to open the operating condition switch (45) of the defective load (3) in a current-less and voltage-less condition, and then automatically to close the quick-operation circuit breaker (28) again.

2. A circuit arrangement according to claim 1 characterised in that the safety means includes a sensor (26) which monitors the current flowing through the main connecting line (23, 5; 24, 5) and/or the applied voltage, and whose output signal is used to control the quick-operation circuit breaker (28).

3. A circuit arrangement according to claim 1 or claim 2 characterised in that there is provided a central unit (37) which monitors actuation of the quick-operation circuit breaker (28).

4. A circuit arrangement according to claim 3 characterised in that the central unit (37) evaluates the signal supplied by the sensor (26) and controls the quick-operation circuit breaker (28) in dependence on the signal outputted by the sensor (26).

5. A circuit arrangement according to one of the preceding claims characterised in that the interrogation circuits (55, 58, 59) are designed to monitor the instantaneous operating condition of the respective load (3).

6. A circuit arrangement according to one of the preceding claims characterised in that the operating condition switches (45) can be put by control signals into more than two different switching conditions which produce a corresponding number of different operating conditions of the associated load (3).

7. A circuit arrangement according to claim 6 characterised in that the control signals for the operating condition switches (45) are produced in dependence on the switching condition of the quick-operation circuit breaker (28) and/or the information signals of the respectively associated interrogation circuit (55, 58, 59).

8. A circuit arrangement according to one of claims 3 to 7 characterised in that associated with each of the loads (3) is an electronic switching unit (10) for controlling and/or monitoring its operating condition, and that the electronic switching units (10) are connected to the central unit (37) with which they interchange signals serving to control and/or monitor the entire circuit arrangement.

9. A circuit arrangement according to claim 8 characterised in that associated with each load (3) is a command key (8), by the actuation of which the respectively desired operating condition of the load (3) can be preset.

10. A circuit arrangement according to claim 9 characterised in that the signals outputted by the command keys (8), for characterising the respectively desired operating conditions, are supplied to the central unit (37) which in accordance therewith supplies the electronic switching units (10) with switching command signals which cause them to put the associated load (3) into the respectively desired operating condition.

## Revendications

1. Agencement de circuit (1) pour l'alimentation en courant d'une pluralité de consommateurs (3) à partir d'une source d'énergie électrique commune dans un réseau de bord, notamment d'un véhicule automobile, l'agencement de circuit (1) présentant les éléments constitutifs suivants :
- pour chacun des consommateurs (3), une ligne de raccordement de consommateur (47), dans laquelle se trouve un commutateur d'état de fonctionnement (45) pouvant être commandé, servant à l'actionnement du consommateur (3), et à l'aide duquel le consommateur (3) peut être isolé d'une amenée d'énergie à partir de la source d'énergie électrique,
- une ligne de raccordement principale (12, 13) qui établit la liaison entre les lignes de raccordement de consommateur (47) et la source d'énergie électrique, et
- un dispositif de sécurité qui englobe, pour chaque consommateur (3), un circuit d'interrogation (55, 58, 59) permettant de constater la présence d'une anomalie électrique dans la zone du consommateur (3),
caractérisé en ce que le dispositif de sécurité englobe un disjoncteur de protection rapide (28) susceptible d'être commandé, qui se trouve en série avec les consommateurs (3) dans la ligne de raccordement principale (23, 5 ; 24, 5), et qui, lors de l'apparition d'une tension s'écartant fortement de la tension nominale et/ou d'un courant trop élevé, est ouvert automatiquement pendant un bref instant, est à nouveau fermé après un court délai, et lors de la présence d'une anomalie de durée plus importante, est à nouveau ouvert, pour permettre, à l'aide des circuits d'interrogation (55, 58, 59), de contrôler à quel consommateur (3) se situe l'anomalie, afin de pouvoir ouvrir le commutateur d'état de fonctionnement (45) du consommateur (3) défectueux à l'état sans courant et sans tension, et ensuite à nouveau fermer automatiquement le disjoncteur de protection rapide (28).

2. Agencement de circuit selon la revendication 1, caractérisé en ce que le dispositif de sécurité englobe un détecteur (26), qui surveille le courant circulant à travers la ligne de raccordement principale (23, 5 ; 24, 5) et/ou la tension établie, et dont le signal de sortie est utilisé pour la commande du disjoncteur de protection rapide (28).

3. Agencement de circuit selon la revendication 1 ou 2, caractérisé en ce qu'il est prévu une unité centrale (37) qui surveille l'actionnement du disjoncteur de protection rapide (28).

4. Agencement de circuit selon la revendication 3, caractérisé en ce que l'unité centrale (37) analyse le signal fourni par le détecteur (26), et commande le disjoncteur de protection rapide (28) en fonction du signal délivré par le détecteur (26).

5. Agencement de circuit selon l'une des revendications précédentes, caractérisé en ce que les circuits d'interrogation (55, 58, 59) sont constitués pour contrôler l'état de fonctionnement instantané du consommateur (3) associé.

6. Agencement de circuit selon l'une des revendications précédentes, caractérisé en ce que les commutateurs d'état de fonctionnement (45) peuvent être amenés, par des signaux de commande, dans plus de deux états de mise en circuit différents, qui produisent un nombre correspondant d'états de fonctionnement différents du consommateur (3) associé.

7. Agencement de circuit selon la revendication 6, caractérisé en ce que les signaux de commande pour les commutateurs d'état de fonctionnement (45) sont engendrés en fonction de l'état de mise en circuit du disjoncteur de protection rapide (28) et/ou des signaux d'information du circuit d'interrogation (55, 58, 59) respectivement associé.

8. Agencement de circuit selon l'une des revendications 3 à 7, caractérisé en ce qu'à chaque consommateur (3) est associée une unité de mise en circuit électronique (10) qui commande et/ou surveille son état de fonctionnement, et en ce que les unités de mise en circuit électroniques (10) sont reliées à l'unité centrale (37) avec laquelle elles échangent des signaux servant à la commande et/ou à la surveillance de l'ensemble de l'agencement de circuit.

9. Agencement de circuit selon la revendication 8, caractérisé en ce qu'à chaque consommateur (3) est associée une touche d'instruction (8) dont l'actionnement permet de prédéfinir chaque état de fonctionnement souhaité du consommateur (3).

10. Agencement de circuit selon la revendication 9, caractérisé en ce que les signaux délivrés par les touches d'instruction (8), en vue de caractériser chacun des états de fonctionnement souhaités, sont conduits à l'unité centrale (37), qui, en fonction de la valeur de ces signaux, délivre aux unités de commande électroniques (10) des signaux d'instructions de mise en circuit, qui conduisent celles-ci à amener le consommateur (3) associé dans l'état de fonctionnement chaque fois souhaité.
